(19) Europäisches Patentamt
European Patent Office
Office européen des brevets

(11) EP 3 214 675 B1

# (12) EUROPEAN PATENT SPECIFICATION

(45) Date of publication and mention of the grant of the patent:
**10.07.2019 Bulletin 2019/28**

(21) Application number: **15853835.5**

(22) Date of filing: **30.10.2015**

(51) Int Cl.:
*H01M 4/62* (2006.01) *C08F 212/08* (2006.01)
*C08F 220/06* (2006.01) *C08F 220/18* (2006.01)
*C08F 220/56* (2006.01) *C08F 220/70* (2006.01)
*C08F 222/02* (2006.01) *C08F 236/06* (2006.01)
*H01M 4/13* (2010.01) *H01M 10/052* (2010.01)
*H01M 10/0566* (2010.01) *C09D 5/24* (2006.01)
*C08L 33/26* (2006.01) *C09D 133/26* (2006.01)

(86) International application number:
**PCT/JP2015/005483**

(87) International publication number:
**WO 2016/067635 (06.05.2016 Gazette 2016/18)**

## (54) BINDER COMPOSITION FOR POSITIVE ELECTRODE FOR LITHIUM-ION RECHARGEABLE BATTERY, SLURRY COMPOSITION FOR POSITIVE ELECTRODE FOR LITHIUM-ION RECHARGEABLE BATTERY, POSITIVE ELECTRODE OF LITHIUM-ION RECHARGEABLE BATTERY, AND LITHIUM-ION RECHARGEABLE BATTERY

BINDEMITTELZUSAMMENSETZUNG FÜR POSITIVELEKTRODE FÜR WIEDERAUFLADBARE LITHIUM-IONEN-BATTERIE, SUSPENSIONSZUSAMMENSETZUNG EINER POSITIVELEKTRODE FÜR WIEDERAUFLADBARE LITHIUM-IONEN-BATTERIE, POSITIVELEKTRODE EINER WIEDERAUFLADBARE LITHIUM-IONEN-BATTERIE UND WIEDERAUFLADBARE LITHIUM-IONEN-BATTERIE

COMPOSITION DE LIANT POUR ÉLECTRODE POSITIVE POUR BATTERIE RECHARGEABLE LITHIUM-ION, COMPOSITION DE SUSPENSION ÉPAISSE POUR ÉLECTRODE POSITIVE POUR BATTERIE RECHARGEABLE LITHIUM-ION, ÉLECTRODE POSITIVE DE BATTERIE RECHARGEABLE LITHIUM-ION, ET BATTERIE RECHARGEABLE LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2014 JP 2014222913**
**13.03.2015 JP 2015051212**

(43) Date of publication of application:
**06.09.2017 Bulletin 2017/36**

(73) Proprietor: **Zeon Corporation**
**Tokyo 100-8246 (JP)**

(72) Inventors:
- **SONOBE, Kenya**
  **Tokyo 100-8246 (JP)**
- **MATSUO, Yusaku**
  **Tokyo 100-8246 (JP)**
- **SHIBUYA, Masanori**
  **Tokyo 100-8246 (JP)**

(74) Representative: **Maiwald Patent- und Rechtsanwaltsgesellschaft mbH**
**Elisenhof**
**Elisenstraße 3**
**80335 München (DE)**

(56) References cited:
**WO-A1-2013/031690** **WO-A1-2013/080938**
**WO-A1-2015/186363** **JP-A- 2014 056 813**
**JP-A- 2014 165 131**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 214 675 B1

## Description

TECHNICAL FIELD

This disclosure relates to a binder composition for lithium ion secondary battery positive electrode-use, a slurry composition for lithium ion secondary battery positive electrode-use, a positive electrode for lithium ion secondary battery-use, and a lithium ion secondary battery.

BACKGROUND

Lithium ion secondary batteries have characteristics such as compact size, light weight, high energy-density, and the ability to be repeatedly charged and discharged, and are used in a wide variety of applications.

An electrode for a lithium ion secondary battery generally includes a current collector and an electrode mixed material layer formed on the current collector. The electrode mixed material layer is formed, for example, by applying, onto the current collector, a slurry composition in which an electrode active material, a binder composition containing a binding material, and so forth are dispersed and/or dissolved in a dispersion medium, and drying the applied slurry composition. In recent years, for example in order to reduce the burden on the environment, interest in an aqueous slurry composition that uses an aqueous medium as a solvent has increased.

Upon using an aqueous slurry composition to prepare a positive electrode mixed material layer that includes a positive electrode active material, however, an alkali component that remains in the positive electrode active material due to being used for production of the positive electrode active material causes the current collector to corrode, leading to the problem of a loss in performance of the lithium ion secondary battery. To address this issue, for example JP 2011-76981 A (PTL 1) discloses a technique for applying an aqueous slurry composition for secondary battery positive electrode-use that includes a positive electrode active material, a water-soluble polymer, and a particulate polymer onto a current collector after adjusting the pH of the slurry composition to a specific range and then drying the slurry composition to produce a positive electrode for lithium ion secondary battery-use, thereby obtaining a secondary battery with excellent output characteristics, while suppressing corrosion of the current collector after application of the slurry composition.

WO2013/080938 (PTL 2) discloses an electrode for a lithium ion secondary battery which comprises an electrode active material and a water-soluble polymer, wherein the water-soluble polymer is a copolymer containing 1 to 30 wt% of an aromatic vinyl monomer unit, 20 to 60 wt % of an unsaturated carboxylic acid monomer unit and 0.1 to 5 wt% of a cross-linkable monomer unit.

CITATION LIST

Patent Literature

PTL 1: JP 2011-76981 A
PTL 2: WO2013/080938

SUMMARY

(Technical Problem)

With the aforementioned conventional method for suppressing corrosion of the current collector by setting the pH of the slurry composition within a specific range, however, it is sometimes not possible to increase the output characteristics of the lithium ion secondary battery sufficiently. Specifically, the binding capacity of the particulate polymer and the water-soluble polymer used as binding material in the aforementioned conventional method is not satisfactory. Therefore, in order to ensure properties such as the adhesion strength between the positive electrode mixed material layer and the current collector, it is necessary to use a large amount of binding material, which is an insulator. As a result, the internal resistance of the lithium ion secondary battery may rise.

Also, lithium ion secondary batteries are required to be repeatedly usable and storable for an extended period of time, but the aforementioned conventional method has room for further improvement in increasing the life characteristics of the lithium ion secondary battery (cycle characteristics, preservation stability).

Therefore, one objective of the present disclosure is to provide a binder composition for lithium ion secondary battery positive electrode-use that reduces internal resistance of a lithium ion secondary battery while also providing the lithium ion secondary battery with excellent life characteristics.

Another objective of the present disclosure is to provide a slurry composition for lithium ion secondary battery positive electrode-use that reduces internal resistance of a lithium ion secondary battery while also providing the lithium ion secondary battery with excellent life characteristics.

Yet another objective of the present disclosure is to provide a positive electrode for lithium ion secondary battery-use that reduces internal resistance of a lithium ion secondary battery while also providing the lithium ion secondary battery with excellent life characteristics, and to provide a lithium ion secondary battery that has reduced internal resistance and excellent life characteristics.

(Solution to Problem)

We conducted diligent investigation with the aim of solving the problems described above. We then formed a positive electrode using a binder composition including a water-soluble polymer obtained through copolymerization of a monomer composition X containing, with predetermined percentage contents, either or both of an ethylenically unsaturated carboxylic acid and an ethylenically unsaturated carboxylic acid salt, and a compound that is copolymerizable, has an ethylenically unsaturated bond, and has a solubility of at least 7 g in 100 g of water at 20°C, the water-soluble polymer having a degree of swelling in electrolysis solution of less than a specific value, and a pH of less than 7.0 at a solid content concentration of 1 mass%. As a result, we discovered that the internal resistance of a lithium ion secondary battery including the positive electrode is reduced, and that the lithium ion secondary battery can be caused to achieve excellent life characteristics. This discovery led to the present disclosure.

In order advantageously to solve the problems described above, a binder composition for lithium ion secondary battery positive electrode-use of the present disclosure comprises: a water-soluble polymer X and water; wherein the water-soluble polymer X is obtained through polymerization of a monomer composition *X including: an ethylenically unsaturated carboxylic acid compound (A) composed of either or both of an ethylenically unsaturated carboxylic acid and an ethylenically unsaturated carboxylic acid salt; and a copolymerizable compound (B) that has an ethylenically unsaturated bond and a solubility of at least 7 g in 100 g of water at 20°C; in the monomer composition X, a percentage content of the ethylenically unsaturated carboxylic acid compound (A) among all monomers is at least 20.0 mass% and no greater than 79.5 mass%, and a percentage content of the compound (B) among all monomers is at least 20.0 mass% and no greater than 79.5 mass%; and the water-soluble polymer X has a degree of swelling in electrolysis solution of less than 120%, and a pH of less than 7.0 at a solid content concentration of 1 mass%. By forming a positive electrode using a binder composition that includes the water-soluble polymer X obtained through polymerization of the monomer composition X containing, with predetermined percentage contents, the ethylenically unsaturated carboxylic acid compound (A) and the compound (B) and having a degree of swelling in electrolysis solution of less than 120%, and a pH of less than 7.0 at a solid content concentration of 1 mass%, a lithium ion secondary battery including the positive electrode can be provided with excellent life characteristics while also reducing internal resistance of the lithium ion secondary battery.

In the binder composition for lithium ion secondary battery positive electrode-use of the present disclosure, the monomer composition X preferably further includes a multifunctional compound (C) having a polyoxyalkylene structure and at least two ethylenically unsaturated bonds, and a percentage content of the multifunctional compound (C) among all monomers in the monomer composition X is preferably at least 0.1 mass% and no greater than 20.0 mass%. As a result of the water-soluble polymer X being formed using the monomer composition X containing the multifunctional compound (C) with the above-described percentage content, internal resistance of the lithium ion secondary battery can be further reduced while further improving the life characteristics. Also, as a result of the multifunctional compound (C) being contained in the monomer composition X, the solid content concentration of a slurry composition prepared using the binder composition of the present disclosure can be increased, and thus positive electrode producibility can be improved.

In the binder composition for lithium ion secondary battery positive electrode-use of the present disclosure, a value obtained by dividing the percentage content of the ethylenically unsaturated carboxylic acid compound (A) among all monomers in the monomer composition X by the percentage content of the compound (B) among all monomers in the monomer composition X is preferably less than 1.5. When the percentage content of the ethylenically unsaturated carboxylic acid compound (A) among all monomers in the monomer composition X and the percentage content of the compound (B) among all monomers in the monomer composition X satisfy the aforementioned relationship, the internal resistance of a lithium ion secondary battery can be further reduced and the cycle characteristics further improved, because the water-soluble polymer X maintains the separation between particles of a positive electrode active material and ensures lithium ion conductivity, without swelling excessively in an electrolysis solution.

In the binder composition for lithium ion secondary battery positive electrode-use of the present disclosure, the monomer composition X may further include a compound (D) composed of at least one selected from the group consisting of an ethylenically unsaturated sulfonic acid, an ethylenically unsaturated sulfonic acid salt, an ethylenically unsaturated phosphoric acid, and an ethylenically unsaturated phosphoric acid salt, and a percentage content of the compound (D)

among all monomers in the monomer composition X is preferably at least 0.4 mass% and no greater than 30.0 mass%. As a result of the water-soluble polymer X being formed using the monomer composition X containing the compound (D) with the above-described percentage content, close adherence between a current collector and a positive electrode mixed material layer that is formed using the binder composition, along with producibility of the positive electrode, can be guaranteed. Also, swelling of the positive electrode can be suppressed, and the cycle characteristics of a lithium ion secondary battery can be further improved.

When the monomer composition X includes a predetermined percentage content of the compound (D) as described above, a value obtained by dividing a sum of the percentage content of the ethylenically unsaturated carboxylic acid compound (A) among all monomers in the monomer composition X and the percentage content of the compound (D) among all monomers in the monomer composition X by the percentage content of the compound (B) among all monomers in the monomer composition X is preferably less than 1.5. When the percentage contents of the ethylenically unsaturated carboxylic acid compound (A), the compound (B), and the compound (D) among all monomers in the monomer composition X satisfy the aforementioned relationship, the close adherence between the positive electrode mixed material layer and the current collector can be increased, and the preservation stability can be further improved. Additionally, the internal resistance of a lithium ion secondary battery can be reduced because the water-soluble polymer X maintains the separation between particles of a positive electrode active material and ensures lithium ion conductivity, without swelling excessively in an electrolysis solution.

The binder composition for lithium ion secondary battery positive electrode-use of the present disclosure preferably further comprises a particulate polymer Y, the particulate polymer Y at least containing an acrylic-based polymer. Through combined use of the water-soluble polymer X and the particulate polymer Y that includes an acrylic-based polymer, the adhesion strength between the positive electrode mixed material layer and the current collector can be improved, and the life characteristics of a lithium ion secondary battery can be further improved.

In order advantageously to solve the problems described above, a slurry composition for lithium ion secondary battery positive electrode-use of the present disclosure comprises: any one of the above-described binder compositions for lithium ion secondary battery positive electrode-use; and a positive electrode active material. As a result of the slurry composition being prepared using any one of the above-described binder compositions, a lithium ion secondary battery including a positive electrode that is produced using this slurry composition can be provided with excellent life characteristics and reduced internal resistance.

In the slurry composition for lithium ion secondary battery positive electrode-use of the present disclosure, the positive electrode active material preferably contains Ni. A commonly known active material may be used as the positive electrode active material, representative examples of which include lithium cobalt oxide and iron phosphate. By using a positive electrode active material that includes Ni (i.e. a ternary positive electrode active material including Ni, Co, Mn (or Al); lithium nickelate; or the like), however, the capacity of the lithium ion secondary battery can be increased. Additionally, in particular a large alkali component remains in a positive electrode active material that includes Ni, but when using such a positive electrode active material, the above-described binder composition contributes to suppressing corrosion of the current collector. Hence, the internal resistance of the lithium secondary battery can be reduced, while also providing the lithium ion secondary battery with excellent life characteristics.

In order advantageously to solve the problems described above, a positive electrode for lithium ion secondary battery-use of the present disclosure comprises, on a current collector, a positive electrode mixed material layer prepared using any of the above-described slurry compositions for lithium ion secondary battery positive electrode-use. As a result of the positive electrode mixed material layer being formed using the above-described slurry composition, a positive electrode for lithium ion secondary battery-use can be obtained that provides a lithium ion secondary battery with excellent life characteristics while also reducing internal resistance of the lithium ion secondary battery.

In order advantageously to solve the problems described above, a lithium ion secondary battery of the present disclosure comprises a positive electrode, a negative electrode, an electrolysis solution, and a separator, wherein the positive electrode is the above-described positive electrode for lithium ion secondary battery-use. Through use of the above-described positive electrode for lithium ion secondary battery-use in this manner, a lithium ion secondary battery can be provided that has reduced internal resistance and excellent life characteristics.

(Advantageous Effect)

According to the present disclosure, it is possible to provide a binder composition for lithium ion secondary battery positive electrode-use that reduces internal resistance of a lithium ion secondary battery while also providing the lithium ion secondary battery with excellent life characteristics.

According to the present disclosure, it is also possible to provide a slurry composition for lithium ion secondary battery positive electrode-use that reduces internal resistance of a lithium ion secondary battery while also providing the lithium ion secondary battery with excellent life characteristics.

Furthermore, according to the present disclosure, it is possible to provide a positive electrode for lithium ion

secondary battery-use that reduces internal resistance of a lithium ion secondary battery while also providing the lithium ion secondary battery with excellent life characteristics, and to provide a lithium ion secondary battery that has reduced internal resistance and excellent life characteristics.

DETAILED DESCRIPTION

The following provides a detailed description of embodiments of the present disclosure.

The binder composition for lithium ion secondary battery positive electrode-use of the present disclosure is used in formation of a positive electrode for a lithium ion secondary battery. A slurry composition for lithium ion secondary battery positive electrode-use of the present disclosure contains the binder composition for lithium ion secondary battery positive electrode-use of the present disclosure and is used in formation of a positive electrode for a lithium ion secondary battery. The positive electrode for lithium ion secondary battery-use of the present disclosure may be produced using the slurry composition for lithium ion secondary battery positive electrode-use of the present disclosure. Furthermore, the lithium ion secondary battery of the present disclosure includes the positive electrode for lithium ion secondary battery-use of the present disclosure.

(Binder composition for lithium ion secondary battery positive electrode-use)

The binder composition for lithium ion secondary battery positive electrode-use of the present disclosure contains a binding material and contains water as a solvent. Moreover, the binder composition for lithium ion secondary battery positive electrode-use of the present disclosure contains a water-soluble polymer X as the binding material. The water-soluble polymer X has a degree of swelling in electrolysis solution of less than 120% and a pH of less than 7.0 as an aqueous solution adjusted to a solid content concentration of 1 mass% and is obtained through polymerization of a monomer composition X containing, with predetermined percentage contents, an ethylenically unsaturated carboxylic acid compound (A) that is composed of either or both of an ethylenically unsaturated carboxylic acid and an ethylenically unsaturated carboxylic acid salt, and a compound (B) that is copolymerizable, has an ethylenically unsaturated bond, and has a solubility of at least 7 g in 100 g of water at 20°C.

<Binding material>

In a positive electrode produced by forming a positive electrode mixed material layer on a current collector using a slurry composition for lithium ion secondary battery positive electrode-use prepared using the binder composition for lithium ion secondary battery positive electrode-use of the present disclosure, the binding material is a component that can hold the components included in the positive electrode mixed material layer to prevent separation of these components from the positive electrode mixed material layer.

The binding material of the binder composition for lithium ion secondary battery positive electrode-use of the present disclosure is required to include the water-soluble polymer X that is obtained through polymerization of the monomer composition X containing the above-described ethylenically unsaturated carboxylic acid compound (A) and the compound (B) with predetermined percentage contents and that has a degree of swelling in electrolysis solution and a pH (at a solid content concentration of 1 mass%) that are less than a predetermined value.

The binder composition for lithium ion secondary battery positive electrode-use of the present disclosure may also further contain a polymer other than the aforementioned water-soluble polymer X, such as the below-described particulate polymer Y, as a binding material.

As a result of the binder composition for lithium ion secondary battery positive electrode-use of the present disclosure containing the water-soluble polymer X that has a degree of swelling in electrolysis solution of less than 120 mass% and a pH of less than 7.0 at a solid content concentration of 1 mass% and that is obtained through polymerization of the monomer composition X containing the ethylenically unsaturated carboxylic acid compound (A) and the compound (B) with predetermined percentage contents, a lithium ion secondary battery can be provided with excellent life characteristics while also reducing internal resistance of the lithium ion secondary battery by using the binder composition of the present disclosure in production of a positive electrode.

Although it has not yet been clarified why internal resistance of a lithium ion secondary battery can be reduced and life characteristics of a lithium ion secondary battery can be improved through use of the aforementioned water-soluble polymer X, the reasons for these effects are thought to be as follows.

First, the compound (B) used in preparation of the water-soluble polymer X has high solubility in water and is thus a highly polar monomer. Consequently, the resultant water-soluble polymer X has low affinity for an electrolysis solution that is typically used in a lithium ion secondary battery, thereby suppressing the swelling of the water-soluble polymer X in the electrolysis solution to an appropriate level (i.e. to less than 120 mass%). It is presumed that, accordingly, the structure of an electrode plate is preserved, leading to improvement of life characteristics such as cycle characteristics.

On the other hand, a carboxyl group of the ethylenically unsaturated carboxylic acid compound (A) improves lithium ion conductivity, reduces lithium ion secondary battery internal resistance, and improves lithium ion secondary battery cycle characteristics. Additionally, by the contribution of the carboxyl group in the ethylenically unsaturated carboxylic acid compound (A) and of compound (B), the water-soluble polymer X suitably covers the positive electrode active material and the conductive material. Therefore, it is presumed that decomposition of the electrolysis solution at the surface of the positive electrode active material and the surface of the conductive material is suppressed, suppressing gas production and thereby improving the preservation stability. Also, it is presumed the dispersibility of the conductive material improves, and a conductive path is formed well by the conductive material, thereby reducing the internal resistance of the lithium ion secondary battery and improving the cycle characteristics. Since a positive electrode active material experiences little change in crystal structure due to lithium ion insertion/desertion as compared to a negative electrode active material, swelling of a positive electrode due to use over an extended period of time is relatively small. There is demand, however, for suppression of electrode swelling in a positive electrode as well. By using the water-soluble polymer X, which has high structural rigidity, it is presumed that such swelling can be suppressed.

Furthermore, by the pH of the water-soluble polymer X being in the acidic range and the water-soluble polymer X containing a carboxyl group, an alkali component derived from the positive electrode active material in the slurry composition can be neutralized, and corrosion of the current collector can be suppressed. The performance of a lithium ion secondary battery (in particular, reduction of internal resistance and improvement in life characteristics) is presumed to improve for this reason.

[Water-soluble polymer X]

The water-soluble polymer X used as the binding material in the binder composition for lithium ion secondary battery positive electrode-use of the present disclosure is a water-soluble copolymer.

Herein, when a polymer is referred to as "water-soluble", this means that when 1 part by mass (solid content equivalent) of the polymer is added to 100 parts by mass of deionized water and is stirred to obtain a mixture that is then adjusted to a temperature of at least 20°C and no higher than 70°C and a pH of at least 3 and no greater than 12 (pH adjustment is performed using NaOH aqueous solution and/or HC1 aqueous solution), and is caused to pass through a 250 mesh screen, the mass of solid content that remains as a residue on the screen without passing through does not exceed 50 mass% of the solid content of the initially added polymer (note that this result is obtained for at least one set of conditions that satisfy the aforementioned temperature and pH ranges).

The water-soluble polymer X is obtained through polymerization of the monomer composition X described below in detail. The ratio of structural units in the water-soluble polymer X that are derived from monomers contained in the monomer composition X is normally the same as the ratio in which these monomers are present in the monomer composition X.

[[Monomer composition X]]

The monomer composition X used in preparation of the water-soluble polymer X contains, for example, monomers, additives such as a polymerization initiator, and a polymerization solvent. Moreover, the monomer composition X contains the ethylenically unsaturated carboxylic acid compound (A) and the compound (B) with predetermined percentage contents as monomers. Specifically, the monomer composition X contains at least 20.0 mass% and no greater than 79.5 mass% of the ethylenically unsaturated carboxylic acid compound (A) and contains at least 20.0 mass% and no greater than 79.5 mass% of the compound (B), where the amount of all monomers in the monomer composition X is taken to be 100 mass%. In other words, the water-soluble polymer X includes at least 20.0 mass% and no greater than 79.5 mass% of structural units derived from the ethylenically unsaturated carboxylic acid compound (A) and at least 20.0 mass% and no greater than 79.5 mass% of structural units derived from compound (B). The monomer composition X may contain a compound that is copolymerizable with the ethylenically unsaturated carboxylic acid compound (A) and the compound (B). Specifically, the monomer composition may contain, as a monomer, a multifunctional compound (C); a compound (D) composed of at least one selected from the group consisting of an ethylenically unsaturated sulfonic acid, an ethylenically unsaturated sulfonic acid salt, an ethylenically unsaturated phosphoric acid, and an ethylenically unsaturated phosphoric acid salt; and any compound other than these.

-Ethylenically unsaturated carboxylic acid compound (A)-

The ethylenically unsaturated carboxylic acid compound (A) can be either or both of an ethylenically unsaturated carboxylic acid and an ethylenically unsaturated carboxylic acid salt. Examples of ethylenically unsaturated carboxylic acids that can be used include ethylenically unsaturated monocarboxylic acids, derivatives of ethylenically unsaturated monocarboxylic acids, ethylenically unsaturated dicarboxylic acids, acid anhydrides of ethylenically unsaturated dicarboxylic acids, and derivatives of ethylenically unsaturated dicarboxylic acids. Examples of ethylenically unsaturated carboxylic acid salts that can be used include sodium salts, potassium salts, and lithium salts of ethylenically unsaturated carboxylic acids.

One type of ethylenically unsaturated carboxylic acid or ethylenically unsaturated carboxylic acid salt may be used individually, or two or more types of ethylenically unsaturated carboxylic acids and/or ethylenically unsaturated carboxylic acid salts may be used in combination in a freely selected ratio.

Examples of ethylenically unsaturated monocarboxylic acids that can be used include acrylic acid, methacrylic acid, and crotonic acid. Examples of derivatives of ethylenically unsaturated monocarboxylic acids that can be used include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of ethylenically unsaturated dicarboxylic acids that can be used include maleic acid, fumaric acid, and itaconic acid. Examples of acid anhydrides of ethylenically unsaturated dicarboxylic acids that can be used include maleic anhydride, diacrylic acid anhydride, methyl maleic anhydride, and dimethyl maleic anhydride. Examples of derivatives of ethylenically unsaturated dicarboxylic acids that can be used include methylmaleic acid, dimethylmaleic acid, phenylmaleic acid, chloromaleic acid, dichloromaleic acid, and fluoromaleic acid.

An ethylenically unsaturated carboxylic acid or an ethylenically unsaturated carboxylic acid salt (such as a lithium salt of an ethylenically unsaturated carboxylic acid) can be used as the ethylenically unsaturated carboxylic acid compound (A). By using an ethylenically unsaturated carboxylic acid salt (including a partially neutralized salt, i.e. a mixture of an ethylenically unsaturated carboxylic acid and a neutralized salt thereof, which are in a state of being neutralized by a base of less than the neutralization amount relative to the ethylenically unsaturated carboxylic acid), the water-solubility of the resulting water-soluble polymer X can be improved, and the polymerization rate can be suppressed. Therefore, when preparing the water-soluble polymer X using water as a polymerization solvent, polymerization can be prevented from progressing inhomogeneously due to precipitation of the water-soluble polymer X, even if the monomer concentration in the monomer composition X is high. Accordingly, polymerization can be caused to progress homogeneously while increasing producibility through use of a monomer composition X that has a high monomer concentration.

Also, the cycle characteristics of a lithium ion secondary battery that includes a positive electrode produced using the binder composition of the present disclosure can be further improved. In order to reduce the internal resistance further, acrylic acid or methacrylic acid is preferably used as the ethylenically unsaturated carboxylic acid compound, with use of acrylic acid being more preferable.

The percentage content of the above-described ethylenically unsaturated carboxylic acid compound (A) among monomers contained in the monomer composition X used in preparation of the water-soluble polymer X is required to be at least 20.0 mass% and no greater than 79.5 mass%. The percentage content of the ethylenically unsaturated carboxylic acid compound (A) among these monomers is preferably at least 21.0 mass%, more preferably at least 22.0 mass%, and even more preferably at least 24.0 mass%, and is preferably no greater than 75.0 mass%, more preferably no greater than 72.0 mass%, even more preferably no greater than 60.0 mass%, and particularly preferably no greater than 50.0 mass%. If the percentage content of the ethylenically unsaturated carboxylic acid compound (A) among the monomers is less than 20.0 mass%, the binding capacity of the water-soluble polymer X cannot be ensured, and the adhesion strength between the positive electrode mixed material layer and the current collector is reduced. Also, the cycle characteristics of a lithium ion secondary battery are reduced. Conversely, if the percentage content of the ethylenically unsaturated carboxylic acid compound (A) among the monomers exceeds 79.5 mass%, the rigidity of the water-soluble polymer X becomes excessive, making the water-soluble polymer X brittle and making it easier for a crack to form in a positive electrode configured using the water-soluble polymer X. As a result, a new interface of the active material is created, leading to gas production or the like, which generates a new solid electrolyte coating, causing the internal resistance of the lithium ion secondary battery to rise and the cycle characteristics and preservation stability to worsen.

-Compound (B)-

The compound (B) is a copolymerizable compound that has an ethylenically unsaturated bond and a solubility of at least 7 g in 100 g of water at 20°C. The reason for this is that a structural unit derived from the compound (B) having the solubility described above exhibits low swelling with respect to an electrolysis solution and exhibits high polymerizability when water is used as a polymerization solvent. In the present disclosure, even when satisfying the above-described solubility, an ethylenically unsaturated carboxylic acid or ethylenically unsaturated carboxylic acid salt is considered to be included in the ethylenically unsaturated carboxylic acid compound (A) and not in the compound (B), and even when satisfying the above-described solubility, an ethylenically unsaturated sulfonic acid, an ethylenically unsaturated phosphoric acid, an ethylenically unsaturated sulfonic acid salt, or an ethylenically unsaturated phosphoric acid salt is considered to be included in the compound (D) and not in the compound (B).

Examples of the compound (B) include compounds having an ethylenically unsaturated bond and a high polarity functional group (for example, a hydroxy group, an amide group, a nitrile group, or an amino group) such as 2-hydroxypropyl methacrylate (100 or greater), 2-hydroxypropyl acrylate (100 or greater), 2-hydroxyethyl methacrylate (100 or greater), 2-hydroxyethyl acrylate (100 or greater), acrylamide (100 or greater), methacrylamide (100 or greater), N-methylolacrylamide (100 or greater), and acrylonitrile (7); and ethylene glycol dimethacrylate (100 or greater). These monomers can be used alone or in combination of two or more thereof in a freely selected ratio. Note that the numbers shown above in parentheses indicate the water solubility (units: g/100 g) at a temperature of 20°C. The water solubility at a temperature of 20°C can be measured by the EPA method (EPA Chemical Fate Testing Guideline CG-1500 Water Solubility).

The compound (B) preferably has a solubility of at least 100 g in 100 g of water at 20°C.

If instead of the aforementioned compound (B), the water-soluble polymer X is prepared using a compound that has a water solubility of less than 7 g at 20°C, such as methyl acrylate (6), ethyl acrylate (2), or butyl acrylate (2), then the water-soluble polymer X swells excessively in an electrolysis solution, so that the structure of an electrode plate cannot be preserved. Consequently, lithium ion secondary battery life characteristics, such as cycle characteristics, cannot be ensured.

Here, in order to reduce the amount of moisture imported into a lithium ion secondary battery and to suppress generation of gas, and in order to ensure the stability of other polymers that can be used together with the water-soluble polymer X (for example, the below-described particulate polymer Y), the compound (B) is preferably not an organic salt such as ammonium salt, or a salt such as sodium salt or potassium salt (in particular a metallic salt), and preferably does not have an acidic group that is easily converted to salt (such as a phenolic hydroxyl group).

In order to reduce the internal resistance further and to improve the life characteristics of a lithium ion secondary battery further, 2-hydroxyethyl acrylate, acrylamide, N-methylolacrylamide, or acrylonitrile is preferably used as the compound (B), with 2-hydroxyethyl acrylate or acrylamide being more preferable, and acrylamide being even more preferable.

The percentage content of the above-described compound (B) among monomers contained in the monomer composition X used in preparation of the water-soluble polymer X is required to be at least 20.0 mass% and no greater than 79.5 mass%. The percentage content of the compound (B) among these monomers is preferably at least 30.0 mass%, more preferably at least 40.0 mass%, and even more preferably at least 50.0 mass%, and is preferably no greater than 75.0 mass%. If the percentage content of the compound (B) among the monomers is less than 20.0 mass%, an electrode plate becomes excessively brittle and it may not be possible to preserve the structure of the electrode plate due to formation of cracks or the like. Consequently, cycle characteristics are reduced and preservation stability is also reduced. Moreover, it may not be possible to sufficiently reduce lithium ion secondary battery internal resistance. On the other hand, if the percentage content of the compound (B) among the monomers is greater than 79.5 mass%, the adhesion strength between the positive electrode mixed material layer and the current collector cannot be ensured, and the cycle characteristics of the lithium ion secondary battery are reduced.

The value (A/B) obtained by dividing the percentage content of the ethylenically unsaturated carboxylic acid compound (A) among all monomers by the percentage content of the compound (B) among all monomers is preferably less than 1.5, more preferably no greater than 1.0, and further preferably no greater than 0.8, and is preferably at least 0.2 and more preferably at least 0.3.

If A/B is less than 1.5, the internal resistance of a lithium ion secondary battery can be further reduced because the water-soluble polymer X maintains the separation between particles of a positive electrode active material and ensures lithium ion conductivity, without swelling excessively in an electrolysis solution.

Moreover, reduction of lithium ion secondary battery internal resistance and improvement of lithium ion secondary battery cycle characteristics can be achieved in a good balance as a result of A/B being in the aforementioned range.

-Multifunctional compound (C)-

The monomer composition X preferably contains a multifunctional compound (C) having a polyoxyalkylene structure and at least two ethylenically unsaturated bonds as a monomer. As a result of the multifunctional compound (C) being used in polymerization of the water-soluble polymer X, the water-soluble polymer X can be provided with suitably high levels of rigidity and flexibility, and the structure of an electrode plate can be preserved, thereby allowing a reduction in the cycle characteristics to be suppressed. Moreover, an ethyleneoxide chain, which has high affinity with water, helps to facilitate polymerization of the water-soluble polymer X. Furthermore, lithium ion conductivity can be ensured and lithium ion secondary battery internal resistance can be reduced. Also, as a result of the multifunctional compound (C) being contained in the monomer composition X, the solid content concentration of a slurry composition prepared using the binder composition of the present disclosure can be increased, and thus positive electrode producibility can be improved.

Herein, the multifunctional compound (C) may be a compound having a polyoxyalkylene structure represented by a general formula: $-(C_mH_{2m}O)_n-$(in the formula, m is an integer of greater than or equal to 1 and n is an integer of greater than or equal to 2), and at least two ethylenically unsaturated bonds.

One type of compound having a polyoxyalkylene structure and at least two ethylenically unsaturated bonds may be used individually, or two or more types of such compounds may be used in combination in a freely selected ratio.

Note that in the present disclosure, a compound that is equivalent to the multifunctional compound (C) is a compound that is not included in the compound (B).

The multifunctional compound (C) is for example a poly(meth)acrylate of a polyol having a polyoxyalkylene structure. Specific examples of multifunctional compounds that can be used include, but are not specifically limited to, compounds (I) to (V) shown below.

In the present disclosure, "(meth)acrylate" is used to indicate "acrylate" and/or "methacrylate".

(I) A polyethylene glycol diacrylate represented by the following general formula

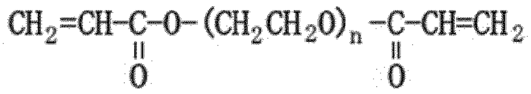
· · · · · (I)

(in the formula, n represents an integer of greater than or equal to 2).

(II) A polytetramethylene glycol diacrylate represented by the following general formula

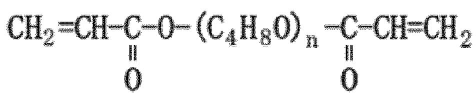
· · · · · (II)

(in the formula, n represents an integer of greater than or equal to 2).

(III) An ethoxylated bisphenol A diacrylate represented by the following general formula

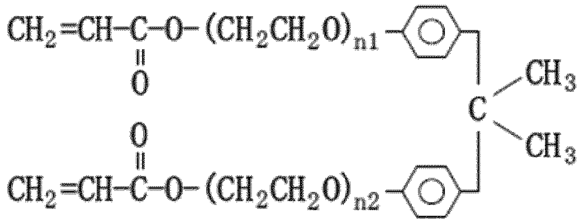
· · · · · (III)

(in the formula, n1 and n2 are integers of greater than or equal to 2 that may be the same or different).

(IV) An ethoxylated glycerin triacrylate represented by the following general formula

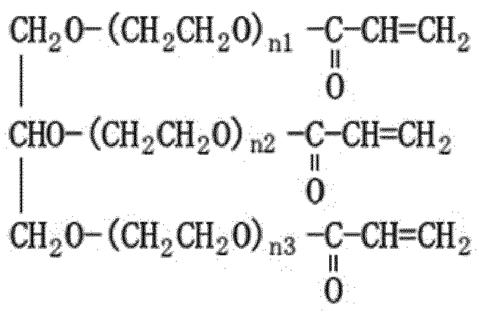
· · · · · (IV)

(in the formula, n1, n2, and n3 are integers of greater than or equal to 2 that may be the same or different).

(V) An ethoxylated pentaerythritol tetraacrylate represented by the following general formula

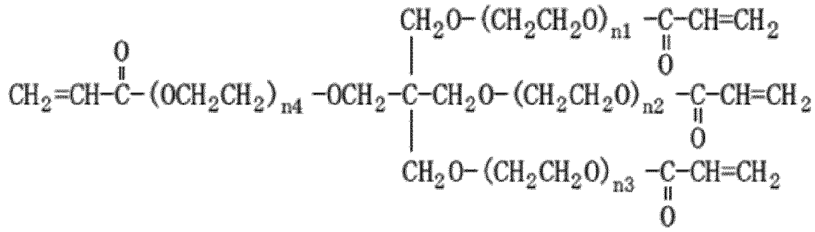 · · · · · (V)

(in the formula, n1, n2, n3, and n4 are integers of greater than or equal to 2 that may be the same or different).

In terms of facilitating polymerization of the water-soluble polymer X and allowing an increase in the solid content concentration of a slurry composition prepared using the binder composition of the present disclosure in order to improve positive electrode producibility, the number of ethylenically unsaturated bonds in the multifunctional compound (C) (i.e., the functionality of the multifunctional compound (C)) is preferably at least 2 and no greater than 6, and more preferably at least 2 and no greater than 4.

Moreover, in order to improve positive electrode producibility further, the multifunctional compound (C) is preferably a polyacrylate having a functionality of 2-6 and more preferably a polyacrylate having a functionality of 2-4.

Furthermore, in order further to improve stability of a slurry composition prepared using the binder composition of the present disclosure and preservation stability of a lithium ion secondary battery, the integer m in the polyoxyalkylene structure ($-(C_mH_{2m}O)_n-$) of the multifunctional compound (C) is preferably no greater than 20, more preferably no greater than 15, and particularly preferably no greater than 10, and is preferably at least 2. Slurry composition stability may be reduced if the integer m is excessively large. On the other hand, rigidity of the water-soluble polymer X may be increased and preservation stability of a lithium ion secondary battery may be reduced if the integer m is excessively small.

For the same reasons as described above, the integer n in the polyoxyalkylene structure ($-(C_mH_{2m}O)_n-$) of the multifunctional compound (C) is preferably no greater than 20, more preferably no greater than 15, and particularly preferably no greater than 10, and is preferably at least 2, more preferably at least 3, and particularly preferably at least 4. Slurry composition stability may be reduced if the integer n is excessively large. On the other hand, rigidity of the water-soluble polymer X may be increased and preservation stability of a lithium ion secondary battery may be reduced if the integer n is excessively small. In a situation in which a plurality of polyoxyalkylene structures ($-(C_mH_{2m}O)_n-$) are included in molecules of the multifunctional compound (C), it is preferable that an average value of the integer n for the plurality of polyoxyalkylene structures is within the aforementioned range, and it is more preferable that the integer n is within the aforementioned range for every one of the polyoxyalkylene structures.

The percentage content of the above-described multifunctional compound (C) among monomers contained in the monomer composition X used in preparation of the water-soluble polymer X is preferably at least 0.1 mass%, more preferably at least 0.3 mass%, and even more preferably at least 0.5 mass%, and is preferably no greater than 20.0 mass% and more preferably no greater than 10.0 mass%. As a result of the percentage content of the multifunctional compound (C) among the monomers being at least 0.1 mass%, lithium ion secondary battery cycle characteristics can be further improved. On the other hand, by the percentage content of the multifunctional compound (C) among the monomers being no greater than 20.0 mass%, it is possible to prevent the water-soluble polymer X from becoming excessively rigid, and thus becoming brittle, and as a result, it is possible to suppress reduction in lithium ion secondary battery preservation stability caused by gas production or the like.

-Compound (D)-

The monomer composition X may include a compound (D) as a monomer, the compound (D) being composed of at least one selected from the group consisting of an ethylenically unsaturated sulfonic acid, an ethylenically unsaturated sulfonic acid salt, an ethylenically unsaturated phosphoric acid, and an ethylenically unsaturated phosphoric acid salt. By using such a compound (D) in polymerization of the water-soluble polymer X, the close adherence between the positive electrode mixed material layer and the current collector can be increased, and the life characteristics can be improved. The reason is presumed to be that the ability of the water-soluble polymer X to bind to a positive electrode active material and to a conductive material increases through the contribution of the sulfonate group and/or the phosphate group, thereby allowing the water-soluble polymer X to cover the positive electrode active material and the conductive material even better.

As the compound (D), at least one selected from the group consisting of an ethylenically unsaturated sulfonic acid, an ethylenically unsaturated phosphoric acid, an ethylenically unsaturated sulfonic acid salt, and an ethylenically unsaturated phosphoric acid salt may be used.

Examples of ethylenically unsaturated sulfonic acids that can be used include 2-acrylamide-2-methylpropane

sulfonic acid, styrene sulfonic acid, and vinyl sulfonic acid. Examples of ethylenically unsaturated sulfonic acid salts that can be used include sodium salts, potassium salts, and lithium salts of ethylenically unsaturated sulfonic acids.

Examples of ethylenically unsaturated phosphoric acids that can be used include 2-(meth)acryloyloxyethyl phosphate, and examples of ethylenically unsaturated phosphoric acid salts that can be used include sodium salts, potassium salts, and lithium salts of ethylenically unsaturated phosphoric acids.

These examples of compound (D) may be used alone or in combination of two or more thereof in a freely selected ratio.

The term "(meth)acryloyl" as used in the present disclosure refers to "acryloyl and/or methacryloyl".

When using an ethylenically unsaturated sulfonic acid and/or an ethylenically unsaturated phosphoric acid as the compound (D), the water solubility of the resulting water-soluble polymer X can be improved over when these acids are not used. Therefore, when preparing the water-soluble polymer X using water as the polymerization solvent, polymerization can be sufficiently prevented from progressing inhomogeneously due to precipitation of the water-soluble polymer X, even if the monomer concentration in the monomer composition X is high. Accordingly, polymerization can be caused to progress homogeneously while increasing producibility through use of a monomer composition X that has a high monomer concentration. Also, by using an ethylenically unsaturated sulfonic acid and/or an ethylenically unsaturated phosphoric acid, swelling of the positive electrode of a lithium ion secondary battery can be suppressed while improving the stability of the slurry composition obtained using the binder composition and increasing the close adherence between the positive electrode mixed material layer and the current collector. The reasons why swelling of the positive electrode can be suppressed by using an ethylenically unsaturated sulfonic acid and/or an ethylenically unsaturated phosphoric acid are not clear but are presumed to be as follows. A phosphate group or a sulfonate group has strong affinity with a positive electrode active material. Therefore, it is thought that the water-soluble polymer X obtained using the compound (D) more easily covers the surface of the positive electrode active material well, suppressing degradation of the electrolysis solution at the positive electrode surface during charging and discharging reactions, thereby making deposits less likely to accumulate. Also, as a result of the water-soluble polymer X obtained using the compound (D) covering the surface of the positive electrode active material well, the dispersibility of the positive electrode active material in the slurry composition improves. Therefore, the residual stress in the resulting positive electrode decreases, suppressing spring-back. Also, by using an ethylenically unsaturated sulfonic acid and/or an ethylenically unsaturated phosphoric acid, the life characteristics of the lithium ion secondary battery can be further improved, and the internal resistance can be even further reduced.

In order to improve the close adherence between the current collector and the positive electrode mixed material layer produced using the binder composition of the present disclosure and to suppress swelling of the positive electrode, 2-acrylamide-2-methylpropane sulfonic acid, styrene sulfonic acid, vinyl sulfonic acid, 2-methacryloyloxyethyl phosphate (acid phosphoxyethyl methacrylate), or salts thereof are preferably used as the compound (D), with 2-acrylamide-2-methylpropane sulfonic acid and 2-acrylamide-2-methylpropane sulfonic acid salt being more preferable.

The percentage content of the compound (D) among monomers contained in the monomer composition X used in preparation of the water-soluble polymer X is preferably at least 0.4 mass%, more preferably at least 0.5 mass%, even more preferably at least 1.0 mass%, and particularly preferably at least 5.0 mass%, and is preferably no greater than 30.0 mass%, more preferably no greater than 20.0 mass%, and even more preferably no greater than 15.0 mass%. By setting the percentage content of the compound (D) among the monomers to at least 0.4 mass%, the close adherence between the positive electrode mixed material layer and the current collector can be ensured. Also, swelling of the positive electrode can be sufficiently suppressed, and the cycle characteristics can be further improved. On the other hand, by setting the percentage content of the compound (D) among the monomers to be no greater than 30.0 mass%, the slurry solid content concentration can be increased and producibility of the positive electrode can be heightened without an excessive rise in the viscosity of the binder composition and the slurry composition that include the water-soluble polymer X. Since the slurry solid content concentration can be increased, migration of the water-soluble polymer X due to thermal convection (uneven distribution on the surface of the positive electrode mixed material layer after completion of drying) can be suppressed when applying the slurry composition onto the current collector and drying, the close adherence between the positive electrode mixed material layer and the current collector can be increased, swelling of the positive electrode can be suppressed, and the cycle characteristics can be further improved.

When the monomer composition X includes the compound (D), the value ((A + D)/B) obtained by dividing the sum of the percentage content of the ethylenically unsaturated carboxylic acid compound (A) among all monomers in the monomer composition X and the percentage content of the compound (D) among all monomers in the monomer composition X by the percentage content of the compound (B) among all monomers in the monomer composition X is preferably less than 1.5, more preferably no greater than 1.2, and even more preferably no greater than 0.8, and is preferably at least 0.3.

If ((A + D)/B) is less than 1.5, the percentage content of salt in the monomers within the monomer composition X can be suppressed, increasing the preservation stability of the lithium ion secondary battery. On the other hand, if ((A + D/)/B) is at least 0.3, the water-soluble polymer X can suitably cover the positive electrode active material and the

conductive material, increasing the close adherence between the positive electrode mixed material layer and the current collector and suppressing swelling of the positive electrode.

-Other compounds-

The monomer composition X used in preparation of the water-soluble polymer X may contain other known compounds that are copolymerizable with the above-described ethylenically unsaturated carboxylic acid compound (A), compound (B), multifunctional compound (C), and compound (D). The percentage content of compounds other than compounds (A) to (D) among the monomers contained in the monomer composition X used in preparation of the water-soluble polymer X is preferably no greater than 20 mass% and more preferably no greater than 10 mass%.

Specific examples of other compounds that can be used include acrylic acid esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, nonyl acrylate, decyl acrylate, lauryl acrylate, n-tetradecyl acrylate, stearyl acrylate, perfluoroalkyl ethyl acrylates, and phenyl acrylate; methacrylic acid esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, nonyl methacrylate, decyl methacrylate, lauryl methacrylate, n-tetradecyl methacrylate, stearyl methacrylate, perfluoroalkyl ethyl methacrylates, and phenyl methacrylate; and other compounds such as vinyl acetate, glycidyl methacrylate, and 2-vinylpyridine.

-Additives-

Examples of additives that may be blended into the monomer composition X used in preparation of the water-soluble polymer X include known additives that can be used in a polymerization reaction. Specific examples include polymerization initiators such as potassium persulfate and polymerization accelerators such as tetramethylethylenediamine. The type and blending amount of such additives may be freely selected depending on the polymerization method and so forth.

-Polymerization solvent-

The polymerization solvent blended into the water-soluble polymer X for use in preparation of the water-soluble polymer X may be a known solvent in which the above-described monomers can be dissolved or dispersed, and may be selected in accordance with the polymerization method and so forth. Of such solvents, water is preferable as the polymerization solvent. Moreover, the polymerization solvent may be an aqueous solution of a freely selected compound or a mixed solution of water and a small amount of an organic medium.

[[Preparation of water-soluble polymer X]]

The water-soluble polymer X that is used as a binding material in the binder composition of the present disclosure can be obtained, for example, through radical polymerization of the monomer composition X, which is obtained by mixing the above-described monomers, additives, and polymerization solvent by a known method. The solution that is obtained through polymerization of the aforementioned monomer composition X and contains the water-soluble polymer X and the polymerization solvent may be used as-produced to prepare a binder composition, in particular when the polymerization solvent is water, or may be used to prepare a binder composition after undergoing solvent substitution, addition of optional components, or the like.

The polymerization method may be a commonly known polymerization method such as aqueous solution polymerization, slurry polymerization, suspension polymerization, or emulsion polymerization. However, aqueous solution polymerization using water as the polymerization solvent is preferable in that a solvent removal process is not required, solvent safety is high, and there are no issues related to mixing in of a surfactant. Aqueous solution polymerization is a method in which the monomer composition X is adjusted to a predetermined concentration and sufficient purging of dissolved oxygen in the reaction system with an inert gas is performed prior to carrying out a polymerization reaction by adding a radical polymerization initiator and performing heating or light irradiation with ultraviolet light or the like as necessary.

When water is used as the polymerization solvent and the above-described monomer composition X is polymerized in water to prepare an aqueous solution containing the water-soluble polymer X, the pH of the aqueous solution after the polymerization is normally from 4.5 to 6.5. The aqueous solution is preferably used as-prepared as a binder composition, or for preparation of a binder composition, without performing an operation for neutralization on the aqueous solution.

[[Properties of water-soluble polymer X]]

The degree of swelling in electrolysis solution of the water-soluble polymer X prepared in the above-described way is required to be less than 120 mass%, is preferably less than 117%, more preferably less than 115 mass%, and even more preferably less than 110 mass%, and is preferably at least 100 mass%, more preferably at least 103 mass%, and even more preferably at least 105 mass%. If the degree of swelling in electrolysis solution of the water-soluble polymer X is 120 mass% or greater, the water-soluble polymer X swells excessively in an electrolysis solution, so that the structure of an electrode plate cannot be preserved and life characteristics are reduced. On the other hand, lithium ion conductivity can be ensured and lithium ion secondary battery internal resistance can be further reduced by the degree of swelling in electrolysis solution of the water-soluble polymer X being at least 100 mass%. Additionally, the flexibility of the water-soluble polymer X can be ensured, cracking and peeling of the water-soluble polymer X can be inhibited, and preservation stability of a lithium ion secondary battery can be further increased.
The degree of swelling in electrolysis solution of the water-soluble polymer X can be measured by the method described in the Examples of the present specification. Furthermore, the degree of swelling in electrolysis solution of the water-soluble polymer X can be adjusted by changing the types and amounts of the ethylenically unsaturated carboxylic acid compound (A), the compound (B), and the compound (D) in the monomer composition X.
The water-soluble polymer X is required to have a pH of less than 7.0 when an aqueous solution of the water-soluble polymer X is adjusted to a solid content concentration of 1 mass%. The pH is preferably no greater than 6.0, more preferably no greater than 5.5, preferably at least 3.0, and more preferably at least 4.0. If the pH of the aqueous solution of the water-soluble polymer X with a solid content concentration of 1 mass% is within the above ranges, the alkali component derived from the positive electrode active material can be neutralized in a slurry composition prepared using the water-soluble polymer X, thereby suppressing corrosion of the current collector. An improvement in the performance of the lithium ion secondary battery can thus be achieved.
The pH of the water-soluble polymer X at a solid content concentration of 1 mass% can be adjusted by changing the type and percentage content of the monomers in the monomer composition X or by adding a separate acid or alkali to the water-soluble polymer X obtained through polymerization.

[[Particulate polymer Y]]

The binder composition for lithium ion secondary battery positive electrode-use of the present disclosure preferably further includes a particulate polymer Y as the binding material. The particulate polymer Y is water-insoluble. Accordingly, the particulate polymer Y is normally present in the form of particles in an aqueous slurry composition that contains water. By using the particulate polymer Y in addition to the water-soluble polymer X, the positive electrode can be provided with suitable flexibility, and breakage of the positive electrode and the formation of cracks can be suppressed. The reason is presumed to be because by having a particulate form, the particulate polymer Y can contribute to improving the binding capacity of the binder composition overall by a different mechanism than the above-described water-soluble polymer X. Also, the particulate polymer Y and the above-described water-soluble polymer X exhibit good compatibility and together suitably cover the positive electrode active material and the conductive material. It is presumed that, as a result, decomposition of the electrolysis solution at the surface of the positive electrode active material and the conductive material is suppressed and the occurrence of gas is suppressed, achieving further improvement in the preservation stability.
Examples of the above-described particulate polymer Y include, but are not limited to, an acrylic-based polymer and a conjugated diene-based polymer. Among these, the particulate polymer Y preferably includes an acrylic-based polymer in order to improve the adhesion strength between the current collector and the positive electrode mixed material layer that is formed using the binder composition of the present disclosure.
The particulate polymer Y can, for example, be obtained through polymerization of a monomer composition Y that contains monomers, additives such as a polymerization initiator, and a polymerization solvent. The ratio of structural units in the particulate polymer Y that are derived from monomers contained in the monomer composition Y is normally the same as the ratio in which these monomers are present in the monomer composition Y.

[[Acrylic-based polymer]]

The following describes an acrylic-based polymer that is preferable as the particulate polymer Y. The acrylic-based polymer is a polymer that includes a structural unit derived from a (meth)acrylic acid ester monomer. The acrylic-based polymer is obtained through polymerization of a monomer composition Y that contains the (meth)acrylic acid ester monomer, and that optionally contains an acidic group-containing monomer, an $\alpha,\beta$-unsaturated nitrile monomer, and other monomers.
The (meth)acrylic acid ester monomer, acidic group-containing monomer, $\alpha,\beta$-unsaturated nitrile monomer,

and other monomers used in preparation of the acrylic-based polymer are described below in detail.

-(Meth)acrylic acid ester monomer-

Examples of the (meth)acrylic acid ester monomer used in preparation of the acrylic-based polymer include acrylic acid alkyl esters such as methyl acrylate, ethyl acrylate, n-propyl acrylate, isopropyl acrylate, n-butyl acrylate, t-butyl acrylate, pentyl acrylate, hexyl acrylate, heptyl acrylate, octyl acrylate, and 2-ethylhexyl acrylate; and methacrylic acid alkyl esters such as methyl methacrylate, ethyl methacrylate, n-propyl methacrylate, isopropyl methacrylate, n-butyl methacrylate, t-butyl methacrylate, pentyl methacrylate, hexyl methacrylate, heptyl methacrylate, octyl methacrylate, and 2-ethylhexyl methacrylate. One kind of these (meth)acrylic acid ester monomers may be used alone, or two or more kinds may be used in combination. Of these (meth)acrylic acid ester monomers, 2-ethylhexyl acrylate is preferable.
The percentage content of the above-described (meth)acrylic acid ester monomer among monomers contained in the monomer composition Y used in preparation of the acrylic-based polymer is preferably at least 50 mass%, more preferably at least 55 mass%, and even more preferably at least 58 mass%, and is preferably no greater than 98 mass%, more preferably no greater than 95 mass%, and even more preferably no greater than 94 mass%.

-Acidic group-containing monomer-

No specific limitations are placed on the acidic group-containing monomer used in preparation of the acrylic-based polymer other than being a monomer that has an acidic group and that is copolymerizable with the above-described (meth)acrylic acid ester monomer. Examples of the acidic group include a carboxyl group (-COOH), a sulfuric acid group ($-SO_3H$), and a phosphoric acid group ($-PO_3H_2$). The acidic group-containing monomer is preferably a carboxyl group-containing monomer. Examples of the carboxyl group-containing monomer include the same examples as described above for the "ethylenically unsaturated carboxylic acid compound (A)" in the "water-soluble polymer X" section. One kind of these carboxyl group-containing monomers may be used alone, or two or more kinds may be used in combination. Of these carboxyl group-containing monomers, itaconic acid is preferable.
The percentage content of the above-described acidic group-containing monomer among monomers contained in the monomer composition Y used in preparation of the acrylic-based polymer is preferably at least 1 mass% and more preferably at least 3 mass%, and is preferably no greater than 6 mass% and more preferably no greater than 5 mass%.

-α,β-Unsaturated nitrile monomer-

Examples of the α,β-unsaturated nitrile monomer used in preparation of the acrylic-based polymer include acrylonitrile and methacrylonitrile. One kind of α,β-unsaturated nitrile monomer may be used alone, or two or more kinds may be used in combination. Of these α,β-unsaturated nitrile monomers, acrylonitrile is preferable.
The percentage content of the above-described α,β-unsaturated nitrile monomer among monomers contained in the monomer composition Y used in preparation of the acrylic-based polymer is preferably at least 5 mass% and more preferably at least 10 mass%, and is preferably no greater than 40 mass% and more preferably no greater than 30 mass%.

-Other monomers-

Examples of other monomers that can be used include monomers that are copolymerizable with the above-described monomers. Specifically, examples of optionally used monomers include the monomers listed as being usable in the above-described water-soluble polymer X, excluding (meth)acrylic acid ester monomers, acidic group-containing monomers, and α,β-unsaturated nitrile monomers. One kind of these monomers may be used alone, or two or more kinds may be used in combination.
While not specifically limited, the percentage content of the above-described other monomer(s) among monomers contained in the monomer composition Y used in preparation of the acrylic-based polymer is preferably no greater than 20 mass%, more preferably no greater than 10 mass%, and even more preferably no greater than 5 mass%.

[[Ratio of blending amount of particulate polymer Y and blending amount of water-soluble polymer X]]

In the binder composition of the present disclosure, a value (Y/X) obtained by dividing the blending amount of the particulate polymer Y by the blending amount of the water-soluble polymer X is preferably at least 0.05, more preferably at least 0.2, and even more preferably at least 0.5, and is preferably no greater than 3, more preferably no greater than 2, even more preferably no greater than 1.5, and particularly preferably no greater than 1.0. By setting Y/X to be at least 0.05, the adhesion strength between the current collector and the positive electrode mixed material layer formed using the binder composition can be ensured, and the cycle characteristics of a lithium ion secondary battery

can be further improved. Additionally, the preservation stability of a lithium ion secondary battery can be further improved. By setting Y/X to be no greater than 3, preparation of a slurry composition is not impeded by excessive viscosity. Additionally, the particulate polymer Y becomes distributed close to the water-soluble polymer X and the positive electrode active material without excessively reducing liquid-holding space of the positive electrode active material, thereby allowing further improvement in the life characteristics of the lithium ion secondary battery.

<Other components>

Besides the above-described components, the binder composition of the present disclosure may optionally contain other known components that can be contained in a binder composition. One example of such a known component is a thickener. The binder composition may contain, as the thickener, a natural thickener such as carboxymethyl cellulose, a polysaccharide thickener, alginic acid, or starch; or a synthetic thickener such as polyacrylic acid. Note that the thickener does not include materials equivalent to the above-described water-soluble polymer X.

Of these thickeners, carboxymethyl cellulose is preferable in terms of providing a slurry composition with thixotropy and preventing sedimentation of a positive electrode active material.

<Preparation of binder composition>

The binder composition of the present disclosure can be prepared by mixing the aforementioned components in the presence of water as a solvent. Specifically, the binder composition can be prepared by mixing the aforementioned components and water using a mixer such as a ball mill, a sand mill, a bead mill, a pigment disperser, a grinding machine, an ultrasonic disperser, a homogenizer, a planetary mixer, or a FILMIX. The binder composition may include a solvent other than water.

When the water-soluble polymer X and the optionally-used particulate polymer Y are each prepared through polymerization of a monomer composition in an aqueous solvent, a binder composition containing water as a solvent can be prepared by mixing these components as-produced in the form of an aqueous solution or an aqueous dispersion.

Furthermore, preparation of the binder composition and preparation of the below-described slurry composition may be implemented simultaneously by, for example, mixing the water-soluble polymer X with a positive electrode active material and then subsequently adding the particulate polymer Y.

<Properties of binder composition>

The pH of the binder composition of the present disclosure is preferably less than 7.0, more preferably no greater than 6.0, and even more preferably no greater than 5.5, and is preferably at least 3.0 and more preferably at least 4.0. If the pH of the binder composition is within the above ranges, the alkali component derived from the positive electrode active material can be neutralized in a slurry composition prepared using the binder composition, thereby suppressing corrosion of the current collector. An improvement in the performance of the lithium ion secondary battery can also be achieved. The pH of the binder composition can be adjusted appropriately with known means.

(Slurry composition for lithium ion secondary battery positive electrode-use)

The slurry composition for lithium ion secondary battery positive electrode-use of the present disclosure includes the above-described binder composition for lithium ion secondary battery positive electrode-use of the present disclosure and a positive electrode active material. As necessary, a solvent such as water, a conductive material, and the above-described thickener are also added. In other words, the slurry composition for lithium ion secondary battery positive electrode-use at least includes the above-described water-soluble polymer X, a positive electrode active material, and water, and optionally may further include the particulate polymer Y, a conductive material, a solvent other than water and a thickener.

When the slurry composition of the present disclosure is used to produce a positive electrode, internal resistance of a lithium ion secondary battery that includes the positive electrode can be reduced while also providing the lithium ion secondary battery with excellent life characteristics.

<Positive electrode active material>

Specific examples of the positive electrode active material include transition metal-containing compounds such as a transition metal oxide, a transition metal sulfide, and a composite metal oxide comprising lithium and a transition metal. Examples of the transition metal include Ti, V, Cr, Mn, Fe, Co, Ni, Cu, and Mo.

Examples of the transition metal oxide include MnO, $MnO_2$, $V_2O_5$, $V_6O_{13}$, $TiO_2$, $Cu_2V_2O_3$, amorphous $V_2O$-

$P_2O_5$, amorphous $MoO_3$, amorphous $V_2O_5$, and amorphous $V_6O_{13}$.

Examples of the transition metal sulfide include $TiS_2$, $TiS_3$, amorphous $MoS_2$, and FeS.

Examples of the composite metal oxide comprising lithium and a transition metal include a lithium-containing composite metal oxide with a layered structure, a lithium-containing composite metal oxide with a spinel structure, and a lithium-containing composite metal oxide with an olivine structure.

Examples of the lithium-containing composite metal oxide with a layered structure include lithium-containing cobalt oxide ($LiCoO_2$), lithium-containing nickel oxide ($LiNiO_2$), lithium-containing composite oxide of Co-Ni-Mn (Li(Co Mn Ni)$O_2$), lithium-containing composite oxide of Ni-Mn-Al, lithium-containing composite oxide of Ni-Co-Al, and a solid solution comprising $LiMaO_2$ and $Li_2MbO_3$. Examples of the lithium-containing composite oxide of Co-Ni-Mn include $Li[Ni_{0.5}CO_{0.2}Mn_{0.3}]O_2$ and $Li[Ni_{1/3}Co_{1/3}Mn_{1/3}]O_2$. Examples of the solid solution comprising $LiMaO_2$ and $Li_2MbO_3$ include $xLiMaO_2 \times (1 - x)Li_2MbO_3$ where x represents a number satisfying $0 < x < 1$, Ma represents one or more types of transition metals having an average oxidation state of 3+, and Mb represents one or more types of transition metals having an average oxidation state of 4+. Examples of solid solutions such as described above include $Li[Ni_{0.17}Li_{0.2}Co_{0.07}Mn_{0.56}]O_2$.

The term "average oxidation state" as used herein refers to an average oxidation state of the "one or more types of transition metals" and is calculated from the molar quantities and the valences of the transition metals. For example, in a situation in which the "one or more types of transition metals" is made up of 50 mol% of $Ni^{2+}$ and 50 mol% of $Mn^{4+}$, the average oxidation state of the "one or more types of transition metals" is $(0.5) \times (2+) + (0.5) \times (4+) = 3+$.

Examples of the lithium-containing composite metal oxide with a spinel structure include lithium manganate ($LiMn_2O_4$) and compounds obtained by substituting part of Mn contained in lithium manganate ($LiMn_2O_4$) with another transition metal. One specific example thereof is $Li_s[Mn_{2-t}Mc_t]O_4$, such as $LiNi_{0.5}Mn_{1.5}O_4$, where Mc represents one or more types of transition metals having an average oxidation state of 4+, specific examples of which include Ni, Co, Fe, Cu, and Cr; t represents a number satisfying $0 < t < 1$; and s represents a number satisfying $0 \leq s \leq 1$. Another example of the positive electrode active material is lithium-rich spinel compounds represented by $Li_{1+x}Mn_{2-x}O_4$ ($0 < x < 2$).

Examples of the lithium-containing composite metal oxide with a spinel structure also include lithium-containing titanium oxide, represented by $Li_{4+Y}Ti_5O_{12}$ ($-1 \leq Y \leq 3$). Examples of lithium-containing titanium oxide other than the above-described spinel structure also include $Li_{2+Y}Ti_3O_7$ ($-1 \leq Y \leq 3$), $Li_{1+Y}Ti_2O_4$ ($0 \leq Y \leq 1$), $Li_{1.1+Y}Ti_{1.8}O_4$ ($0 \leq Y \leq 1$), $Li_{1.07+Y}Ti_{1.86}O_4$ ($0 \leq Y \leq 1$), which have a Ramsdellite structure.

Examples of the lithium-containing composite metal oxide with an olivine structure include olivine-type lithium phosphate compounds represented by $Li_yMdPO_4$, such as olivine-type lithium iron phosphate ($LiFePO_4$) and olivine-type manganese lithium phosphate ($LiMnPO_4$), where Md represents one or more types of transition metals having an average oxidation state of 3+, examples of which include Mn, Fe, and Co, and y represents a number satisfying $0 \leq y \leq 2$. Md of the olivine-type lithium phosphate compounds represented by $Li_yMdPO_4$ may be partly substituted with another metal. Examples of the metal possibly substituting the part of Md include Cu, Mg, Zn, V, Ca, Sr, Ba, Ti, Al, Si, B, and Mo.

In order to increase the capacity of a lithium ion secondary battery, a positive electrode active material containing Ni is preferably used as the positive electrode active material.

Examples of a positive electrode active material that contain Ni include $LiNiO_2$, $Li[Ni_{0.5}Co_{0.2}Mn_{0.3}]O_2$, $Li[Ni_{1/3}Co_{1/3}Mn_{1/3}]O_2$, and $Li[Ni_{0.17}Li_{0.2}Co_{0.07}Mn_{0.56}]O_2$.

An alkali component used during production of the active material, such as lithium carbonate ($Li_2Co_3$) or lithium hydroxide (LiOH), remains in particular abundance in such a positive electrode active material that contains Ni and in the above-described lithium-containing titanium oxide. Therefore, upon producing a positive electrode by applying an aqueous slurry composition that contains this positive electrode active material on a current collector composed of aluminum or the like, the alkali component is eluted from the positive electrode active material, leading to the problem of corrosion of the current collector. In the present disclosure, however, a binder composition that contains a carboxyl group and includes the water-soluble polymer X that exhibits acidity is used to prepare an aqueous slurry composition. Therefore, the aforementioned eluted alkali component can be neutralized, thereby suppressing corrosion of the current collector.

<Conductive material>

The conductive material ensures electrical contact within the positive electrode active material in a positive electrode mixed material layer. The conductive material used in the slurry composition of the present disclosure is not specifically limited and may, for example, be a known conductive material. Specific examples of the conductive material include conductive carbon materials such as acetylene black, Ketjenblack® (Ketjenblack is a registered trademark in Japan, other countries, or both), furnace black, graphite, carbon fiber, carbon flakes, and carbon nanofibers (for example, carbon nanotubes or vapor-grown carbon fiber); and fibers and foils of various metals. Among these, acetylene black, Ketjenblack, or furnace black is preferably used as the conductive material in order to reduce internal resistance sufficiently while maintaining the battery capacity of a lithium ion secondary battery.

<Preparation method of slurry composition for lithium ion secondary battery positive electrode-use>

The aforementioned slurry composition for lithium ion secondary battery positive electrode-use can be prepared by dispersing the aforementioned components in water. Specifically, the slurry composition can be prepared by mixing the aforementioned components and a solvent including water using a mixer such as a ball mill, a sand mill, a bead mill, a pigment disperser, a grinding machine, an ultrasonic disperser, a homogenizer, a planetary mixer, or a FILMIX.

While not specifically limited, the pH of the slurry composition prepared as described above is preferably at least 6, more preferably at least 7, even more preferably at least 7.5, and particularly preferably at least 9.1, and is preferably no greater than 12, more preferably no greater than 11.5, and even more preferably no greater than 11. If the pH of the slurry composition is within the aforementioned ranges, corrosion of the current collector can be sufficiently suppressed.

The content of the water-soluble polymer X in the slurry composition per 100 parts by mass of the positive electrode active material is preferably at least 0.5 parts by mass, more preferably at least 0.7 parts by mass, and even more preferably at least 1.2 parts by mass, and is preferably no greater than 10 parts by mass, more preferably no greater than 5 parts by mass, and even more preferably no greater than 3 parts by mass. As a result of the content of the water-soluble polymer X in the slurry composition being within the above-described ranges, the characteristics of the water-soluble polymer X can be appropriately expressed. In particular, the internal resistance of a lithium ion secondary battery can be further reduced.

Furthermore, the total content of the water-soluble polymer X and the particulate polymer Y in the slurry composition per 100 parts by mass of the positive electrode active material is preferably at least 2 parts by mass and more preferably at least 3 parts by mass, and is preferably no greater than 7 parts by mass, more preferably no greater than 4 parts by mass, and even more preferably no greater than 3.5 parts by mass. As a result of the total content of the water-soluble polymer X and the particulate polymer Y in the slurry composition being within the above-described ranges, a reduction in the internal resistance and improvement in the cycle characteristics and the preservation stability of the lithium ion secondary battery can be achieved in a balanced manner.

In the slurry composition of the present disclosure, a suitable range for the value (Y/X) obtained by dividing the blending amount of the particulate polymer Y by the blending amount of the water-soluble polymer X is the same as the range for the binder composition of the present disclosure. Also, the blending amounts of the thickener and conductive material may be adjusted appropriately.

(Positive electrode for lithium ion secondary battery)

A positive electrode for lithium ion secondary battery-use of the present disclosure includes a positive electrode mixed material layer that is obtained using the slurry composition of the present disclosure. In greater detail, the positive electrode for lithium ion secondary battery-use of the present disclosure is provided with a current collector and a positive electrode mixed material layer formed on the current collector. The positive electrode mixed material layer is normally a dried product of the aforementioned slurry composition. At least a positive electrode active material and the water-soluble polymer X as a binding material are included in the positive electrode mixed material layer. When the above-described water-soluble polymer X and/or particulate polymer Y include a crosslinkable structural unit, then at the time of drying of the slurry composition, or at the time of heat treatment optionally performed after drying, the water-soluble polymer X and/or particulate polymer Y may be crosslinked (in other words, the positive electrode mixed material layer may include a crosslinked product of the above-described water-soluble polymer X and/or particulate polymer Y). Components contained in the positive electrode mixed material layer are components that were contained in the aforementioned slurry composition for lithium ion secondary battery positive electrode-use. Furthermore, the suitable ratio of these components is the same as the suitable ratio of these components in the slurry composition for positive electrode-use.

As a result of being prepared using the binder composition for lithium ion secondary battery positive electrode-use of the present disclosure, the aforementioned positive electrode for lithium ion secondary battery-use can improve life characteristics of a lithium ion secondary battery while also reducing internal resistance of the lithium ion secondary battery.

<Production of positive electrode for lithium ion secondary battery-use>

The aforementioned positive electrode for lithium ion secondary battery-use may, for example, by produced through the steps of applying the above-described slurry composition for lithium ion secondary battery positive electrode-use onto a current collector (application step) and drying the slurry composition for lithium ion secondary battery positive electrode-use applied onto the current collector to form a positive electrode mixed material layer on the current collector (drying step).

[Application step]

The aforementioned slurry composition for lithium ion secondary battery positive electrode-use may be applied onto the current collector with any commonly known method. Specific examples of application methods that can be used include doctor blading, dip coating, reverse roll coating, direct roll coating, gravure coating, extrusion coating, and brush coating. The slurry composition may be applied onto one side or both sides of the current collector. The thickness of the slurry coating on the current collector after application but before drying may be appropriately set in accordance with the thickness of the positive electrode mixed material layer to be obtained after drying.

The current collector onto which the slurry composition is applied is a material having electrical conductivity and electrochemical durability. Specifically, the current collector may for example be made of iron, copper, aluminum, nickel, stainless steel, titanium, tantalum, gold, or platinum. Of these materials, aluminum foil is particularly preferable as a current collector used for a positive electrode. One of the aforementioned materials may be used individually, or two or more of the aforementioned materials may be used in combination in a freely selected ratio.

[Drying step]

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Drying the slurry composition on the current collector in this way forms a positive electrode mixed material layer on the current collector to yield a positive electrode for lithium ion secondary battery-use that includes the current collector and the positive electrode mixed material layer.

After the drying step, the positive electrode mixed material layer may be further subjected to pressing treatment such as mold pressing or roll pressing. The pressure treatment may improve the adhesion strength between the positive electrode mixed material layer and the current collector.

Furthermore, when the positive electrode mixed material layer includes a curable polymer, the polymer is preferably cured after forming the positive electrode mixed material layer.

(Lithium ion secondary battery)

The lithium ion secondary battery of the present disclosure includes a positive electrode, a negative electrode, an electrolysis solution, and a separator. The positive electrode for lithium ion secondary battery-use of the present disclosure is used as the positive electrode. As a result of using the positive electrode for lithium ion secondary battery-use of the present disclosure, the aforementioned lithium ion secondary battery has reduced internal resistance and excellent life characteristics.

<Negative electrode>

The negative electrode of the aforementioned lithium ion secondary battery may be any known negative electrode that is used as a negative electrode for lithium ion secondary battery-use. Specifically, the negative electrode that is used may for example be a negative electrode obtained by forming a negative electrode mixed material layer on a current collector.

The current collector may be made of a metal material such as aluminum. The negative electrode mixed material layer may be a layer containing a known negative electrode active material and binding material.

<Electrolysis solution>

The electrolysis solution may be formed by dissolving an electrolyte in a solvent.

The solvent may be an organic solvent that can dissolve an electrolyte. Specifically, the solvent may be an alkyl carbonate solvent to which a viscosity modification solvent is added. Examples of the alkyl carbonate solvent include ethylene carbonate, propylene carbonate, and γ-butyrolactone. Examples of the viscosity modification solvent include 2,5-dimethyltetrahydrofuran, tetrahydrofuran, diethyl carbonate, ethyl methyl carbonate, dimethyl carbonate, methyl acetate, dimethoxyethane, dioxolane, methyl propionate, and methyl formate.

The electrolyte may be a lithium salt. Examples of the lithium salt include lithium salts described in JP 2012-204303 A. Of these lithium salts, $LiPF_6$, $LiClO_4$, and $CF_3SO_3Li$ are preferred as electrolytes because they readily dissolve in organic solvents and exhibit a high degree of dissociation.

<Separator>

Examples of the separator include separators described in JP 2012-204303 A. Of these separators, a fine porous membrane made of polyolefinic resin (polyethylene, polypropylene, polybutene, or polyvinyl chloride) is preferred since such a membrane can reduce the total thickness of the separator, which increases the ratio of the electrode active material in the lithium ion secondary battery, and consequently increases the capacity per unit volume.

<Production method of lithium ion secondary battery>

The lithium ion secondary battery may be produced, for example, by stacking the positive electrode and the negative electrode with the separator in-between, rolling or folding the resultant stack as necessary in accordance with the battery shape to place the stack in a battery container, filling the battery container with the electrolysis solution, and sealing the battery container. In order to prevent pressure increase inside the lithium ion secondary battery and occurrence of overcharging or overdischarging, an overcurrent preventing device such as a PTC device or a fuse; an expanded metal; or a lead plate may be provided as necessary. The shape of the lithium ion secondary battery may for example be a coin type, button type, sheet type, cylinder type, prismatic type, or flat type.

EXAMPLES

The following provides a more specific description of the present disclosure based on examples. However, the present disclosure is not limited to the following examples. In the following, "%" and "parts" used to express quantities are by mass, unless otherwise specified.

For the Examples and the Comparative Examples, evaluations were performed by the following methods in order to evaluate the degree of swelling in electrolysis solution of the water-soluble polymer X, the glass-transition temperature and volume-average particle diameter D50 of the particulate polymer (the particulate polymer Y and the particulate polymer for negative electrode-use), the adhesion strength between the positive electrode mixed material layer and the current collector, and the rate characteristics, cycle characteristics, and preservation stability of the lithium ion secondary battery.

<Degree of swelling in electrolysis solution>

An aqueous solution containing the water-soluble polymer X was used to form a film with a thickness of 1 ± 0.3 mm by drying in an environment of 50% humidity and a temperature of 23°C to 25°C. The resultant film was dried for 10 hours in a vacuum dryer at a temperature of 60°C, and approximately 1 g of the dried film was cut out and precisely weighed. The mass of a film piece obtained by this cutting was taken to be W0. The film piece was immersed in an electrolysis solution (composition: $LiPF_6$ solution of 1.0 M in concentration (mixed solvent of 3/7 (volume ratio) ethylene carbonate (EC)/ethyl methyl carbonate (EMC) used as solvent; 2 volume% (solvent ratio) of vinylene carbonate used as additive)) for 3 days at an ambient temperature of 60°C and was allowed to swell. Thereafter, the film piece was pulled out of the electrolysis solution and the mass thereof was measured after electrolysis solution on the surface of the film piece had been wiped off using a KimWipe. The mass of the swollen film piece was taken to be W1.

The degree of swelling in electrolysis solution was calculated using the following calculation formula.

$$\text{Degree of swelling in electrolysis solution (mass\%)} = W1/W0 \times 100$$

<Glass-transition temperature>

An aqueous dispersion containing the particulate polymer was used to form a film of 1 ± 0.3 mm in thickness by drying for 3 days in an environment of 50% humidity and a temperature of 23°C to 26°C. The resultant film was dried for 10 hours in a vacuum dryer at a temperature of 60°C. The dried film was used as a measurement sample in order to measure the glass-transition temperature Tg (°C) in accordance with JIS K7121, under conditions of a measurement temperature of -100°C to 180°C and a heating rate of 5°C/minute, using a differential scanning calorimeter (DSC 6220 produced by SII NanoTechnology Inc.).

<Volume average particle diameter D50>

The volume average particle diameter D50 of the particulate polymer was taken as the particle diameter at

which, in a particle size distribution measured by a laser diffraction particle size analyzer (SALD-3100 produced by Shimadzu Corporation) with respect to an aqueous dispersion of the particulate polymer adjusted to a solid content concentration of 15 mass%, the cumulative volume calculated from the small diameter end of the distribution reached 50%.

<Adhesion strength between positive electrode mixed material layer and current collector>

A test piece having a rectangular shape of 100 mm in length and 10 mm in width was cut out from a produced positive electrode for lithium ion secondary battery-use. Cellophane tape (tape prescribed by JIS Z1522) was attached to the surface of the positive electrode mixed material layer with the surface on which the positive electrode mixed material layer was formed facing downward. Thereafter, one end of the current collector was pulled vertically at a pulling rate of 50 mm/minute to peel off the current collector while measuring stress during the peeling (note that the cellophane tape was fixed to a test bed). This measurement was performed 3 times to obtain an average value. The average value was taken to be the peel strength and was evaluated based on the following criteria. A larger value for the peel strength indicates better adhesion strength between the positive electrode mixed material layer and the current collector.

A: Peel strength of at least 200 N/m
B: Peel strength of at least 100 N/m and less than 200 N/m
C: Peel strength of less than 100 N/m

<Rate characteristics of lithium ion secondary battery>

A produced lithium ion secondary battery was left for 5 hours at a temperature of 25°C after being filled with an electrolysis solution. Next, the lithium ion secondary battery was charged to a cell voltage of 3.65 V by a 0.2 C constant-current method at a temperature of 25°C, and was then subjected to aging treatment for 12 hours at a temperature of 60°C. The lithium ion secondary battery was subsequently discharged to a cell voltage of 3.00 V by a 0.2 C constant-current method at a temperature of 25°C. Thereafter, CC-CV charging of the lithium ion secondary battery was performed with a 0.2 C constant current (upper limit cell voltage 4.30 V) and CC discharging of the lithium ion secondary battery was performed to 3.00 V with a 0.2 C constant current.

Next, the lithium ion secondary battery was charged and discharged between 4.30 V and 3.00 V with a 0.2 C constant current at an ambient temperature of 25°C. The discharge capacity in this operation was taken to be C0. Thereafter, CC-CV charging of the lithium ion secondary battery with a 0.2 C constant current and discharging with a 1.0 C constant current were similarly performed. The discharge capacity in this operation was taken to be C1. A capacity change rate represented by $\Delta C = (C1/C0) \times 100$ (%) was obtained as a rate characteristic and was evaluated based on the following criteria. A larger value for the capacity change rate $\Delta C$ indicates higher discharge capacity at high currents and lower internal resistance.

A: $\Delta C$ of at least 70%
B: $\Delta C$ of at least 65% and less than 70%
C: $\Delta C$ of less than 65%

<Cycle characteristics of lithium ion secondary battery>

A produced lithium ion secondary battery was left for 5 hours at a temperature of 25°C after being filled with an electrolysis solution. Next, the lithium ion secondary battery was charged to a cell voltage of 3.65 V by a 0.2 C constant-current method at a temperature of 25°C, and was then subjected to aging treatment for 12 hours at a temperature of 60°C. The lithium ion secondary battery was subsequently discharged to a cell voltage of 3.00 V by a 0.2 C constant-current method at a temperature of 25°C. Thereafter, CC-CV charging of the lithium ion secondary battery was performed by a 0.2 C constant-current method (upper limit cell voltage 4.30 V) and CC discharging of the lithium ion secondary battery was performed to 3.00 V by a 0.2 C constant-current method. An initial discharge capacity X1 of this operation was measured.

Next, 100 cycles were carried out of an operation in which the lithium ion secondary battery was charged and discharged between a cell voltage of 4.30 V and a cell voltage of 3.00 V with a charge/discharge rate of 1.0 C at an ambient temperature of 45°C. A discharge capacity X2 at the $100^{th}$ cycle was measured. The initial discharge capacity X1 and the discharge capacity X2 were used to calculate a capacity change rate represented by $\Delta C' = (X2/X1) \times 100$ (%), which was evaluated based on the following criteria. A larger value for the capacity change rate $\Delta C'$ indicates better cycle characteristics.

A: $\Delta C'$ of at least 90%

B: ΔC' of at least 87% and less than 90%
C: ΔC' of less than 87%

<Preservation stability of lithium ion secondary battery>

A produced lithium ion secondary battery was left for 5 hours at a temperature of 25°C after being filled with an electrolysis solution. Next, the lithium ion secondary battery was charged to a cell voltage of 3.65 V by a 0.2 C constant-current method at a temperature of 25°C, and was then subjected to aging treatment for 12 hours at a temperature of 60°C. The lithium ion secondary battery was subsequently discharged to a cell voltage of 2.75 V by a 0.2 C constant-current method at a temperature of 25°C. Thereafter, CC-CV charging of the lithium ion secondary battery was performed by a 0.2 C constant-current method (upper limit cell voltage 4.30 V) and CC discharging of the lithium ion secondary battery was performed to a cell voltage of 3.00 V by a 0.2 C constant-current method.

Next, a cell volume (V0) of the lithium ion secondary battery was calculated by the Archimedean method. The lithium ion secondary battery was subsequently charged to a cell voltage of 4.40 V by a 0.2 C constant-current method at a temperature of 25°C and was then left for 3 days at a temperature of 80 ± 2°C. Thereafter, the lithium ion secondary battery was discharged to a cell voltage of 3.00 V by a 0.2 C constant-current method at a temperature of 25°C. Next, a cell volume (VI) of the lithium ion secondary battery was measured and an amount of gas production was calculated according to the calculation formula shown below. The calculated amount of gas production was evaluated based on the following criteria. A smaller amount of gas production indicates better preservation stability.

$$\text{Amount of gas production (mL)} = \text{V1 (mL)} - \text{V0 (mL)}$$

A: Amount of gas production of less than 2.0 mL
B: Amount of gas production of at least 2.0 mL and less than 3.0 mL
C: Amount of gas production of at least 3.0 mL

(Example 1)

<Preparation of aqueous solution containing water-soluble polymer X>

A 1 L flask equipped with a septum was charged with 720 g of deionized water. The deionized water was heated to a temperature of 40°C, and the inside of the flask was purged with nitrogen gas at a flow rate of 100 mL/minute. Next, 10 g of deionized water, 9.5 g (25.0%) of acrylic acid as the ethylenically unsaturated carboxylic acid compound (A), and 28.5 g (75.0%) of acrylamide as the compound (B) were mixed and were injected into the flask using a syringe. Thereafter, 8.0 g of a 2.5% potassium persulfate aqueous solution was added to the flask as a polymerization initiator using a syringe. After 15 minutes had passed, 40 g of a 2.0% tetramethylethylenediamine aqueous solution was added as a polymerization accelerator using a syringe. After 4 hours had passed, a further 4.0 g of the 2.5% potassium persulfate aqueous solution was added to the flask as a polymerization initiator and a further 20 g of the 2.0% tetramethylethylenediamine aqueous solution was added as a polymerization accelerator. Heating was performed to a temperature of 60°C in order to promote a polymerization reaction. After 3 hours had passed, the flask was opened to air to terminate the polymerization reaction, and the product was deodorized at a temperature of 80°C to remove residual monomers, thereby obtaining an aqueous solution containing the water-soluble polymer X.

Using this aqueous solution containing the water-soluble polymer X, the degree of swelling in electrolysis solution and the pH at a solid content concentration of 1% of the water-soluble polymer X were measured. The results are shown in Table 1.

<Preparation of aqueous dispersion containing particulate polymer Y (acrylic-based polymer)>

A 5 MPa pressure vessel equipped with a stirrer was charged with 4 parts of itaconic acid as an acidic group-containing monomer, 2-ethylhexyl acrylate (76 parts) as a (meth)acrylic acid ester monomer, 20 parts of acrylonitrile as an α,β-unsaturated nitrile monomer, 1 part of sodium dodecyldiphenylether sulfonate ("CALFAX DB-45" produced by Pilot Chemical Company) as a surfactant, 150 parts of deionized water, and 0.8 parts of potassium persulfate as a polymerization initiator. The contents of the pressure vessel were sufficiently stirred and were then heated to a temperature of 50°C to initiate polymerization. When the polymer conversion rate reached 96%, the reaction was terminated by cooling to yield a mixture containing the particulate polymer Y. The aforementioned mixture containing the particulate polymer Y was adjusted to a pH of 8 through addition of a 5% sodium hydroxide aqueous solution. Subsequently, after

removing unreacted monomers from the mixture containing the particulate polymer Y by thermal-vacuum distillation, the mixture was cooled to 30°C or lower to yield an aqueous dispersion containing the desired particulate polymer Y. The particulate polymer Y had a 50% volume-average particle diameter D50 of 150 nm and a glass-transition temperature of -39°C.

<Preparation of aqueous dispersion containing particulate polymer for negative electrode-use (styrene-butadiene-based polymer)>

A 5 MPa pressure vessel equipped with a stirrer was charged with 65 parts (63.1%) of styrene as an aromatic vinyl monomer, 35 parts (34.0%) of 1,3-butadiene as an aliphatic conjugated diene monomer, 2 parts (1.9%) of itaconic acid as a carboxyl group-containing monomer, 1 part (1.0%) of 2-hydroxyethyl acrylate as a hydroxyl group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. The contents of the pressure vessel were sufficiently stirred and were then heated to a temperature of 55°C to initiate polymerization.

Cooling was performed in order to terminate the reaction once the amount of monomer consumption had reached 95.0%. The aqueous dispersion containing the resultant polymer was adjusted to a pH of 8 through addition of a 5% sodium hydroxide aqueous solution. Thereafter, unreacted monomers were removed by distillation under heating and reduced pressure. Cooling was then performed to a temperature of 30°C or lower to yield an aqueous dispersion containing a particulate polymer for negative electrode-use composed of a styrene-butadiene-based polymer. The particulate polymer for negative electrode-use had a glass-transition temperature of 10°C.

<Preparation of slurry composition for lithium ion secondary battery positive electrode-use>

A planetary mixer was charged with 100 parts of NMC532 (a lithium-containing composite oxide of Ni-Mn-Co) as a positive electrode active material, 4 parts of acetylene black as a conductive material (HS-100 produced by Denki Kagaku Kogyo Kabushiki Kaisha), and 2 parts of water-soluble polymer X (solid content equivalent). The contents of the planetary mixer were then kneaded for 60 minutes at a rotational speed of 45 rpm. Thereafter, 2 parts by solid content equivalent of the aqueous solution containing the particulate polymer Y (solid content concentration: 40%) was added (preparation of binder composition containing the water-soluble polymer X and the particulate polymer Y), and further kneading was performed for 40 minutes at a rotational speed of 40 rpm. Deionized water was added in order to adjust the viscosity to 2000 $\pm$ 100 mPa $\times$ s (measured by a B-type viscometer at 12 rpm) and thereby prepare a slurry composition for lithium ion secondary battery positive electrode-use. At this point, the slurry composition had a solid content concentration of 53 mass%. The pH of the slurry composition was also measured. The results are shown in Table 1.

<Production of positive electrode for lithium ion secondary battery-use>

A comma coater was used to apply the resultant slurry composition for lithium ion secondary battery positive electrode-use onto aluminum foil of 20 $\mu$m in thickness, used as a current collector, so that the application amount of the slurry composition was from 23.0 mg/cm$^2$ to 25.0 mg/cm$^2$. Thereafter, the aluminum foil onto which the slurry composition for lithium ion secondary battery positive electrode-use had been applied was conveyed inside a 60°C oven for 2 minutes at a speed of 0.5 m/minute in order to dry the slurry composition. Heat treatment was subsequently performed for 2 minutes at a temperature of 120°C to obtain a positive electrode web.

The resultant positive electrode web was pressed using a roll press so as to have a density of 3.40 g/cm$^3$ to 3.50 g/cm$^3$. The pressed positive electrode web was then left for 3 hours under vacuum conditions at an ambient temperature of 120°C in order to remove water, and a positive electrode was obtained as a result. The positive electrode was used in order to evaluate adhesion strength between the positive electrode mixed material layer and the current collector. The results are shown in Table 1.

<Production of negative electrode for lithium ion secondary battery-use>

A planetary mixer was charged with 100 parts of artificial graphite (theoretical capacity: 350 mAh/g) as a negative electrode active material and 1 part (solid content equivalent) of an aqueous solution (solid content concentration: 1.0%) containing carboxymethyl cellulose sodium salt ("MAC350HC" produced by Nippon Paper Chemical Co., Ltd.) as a thickener. The contents of the planetary mixer were then diluted to a solid content concentration of 60% using deionized water and were kneaded for 60 minutes at a rotational speed of 45 rpm. Thereafter, 0.01 parts by solid content equivalent of the aqueous dispersion containing the above-described particulate polymer for negative electrode-use (solid content concentration: 40%) was added and further kneading was performed for 40 minutes at a rotational speed of 40 rpm.

Deionized water was added in order to adjust the viscosity to 1100 ± 100 mPa × s (measured by a B-type viscometer at 12 rpm) and thereby prepare a slurry composition for lithium ion secondary battery negative electrode-use. At this point, the slurry composition had a solid content concentration of 45 mass%.

A comma coater was used to apply the aforementioned slurry composition for lithium ion secondary battery negative electrode-use onto the surface of copper foil of 15 μm in thickness, used as a current collector, so that the application amount of the slurry composition was from 10.2 $mg/cm^2$ to 10.8 $mg/cm^2$. The copper foil onto which the slurry composition for lithium ion secondary battery negative electrode-use had been applied was conveyed inside an 80°C oven for 2 minutes and a 110°C oven for 2 minutes at a speed of 400 mm/minute in order to dry the slurry composition on the copper foil and thereby obtain a negative electrode web.

The resultant negative electrode web was pressed using a roll press so as to have a density of 1.68 $g/cm^3$ to 1.72 $g/cm^3$. The pressed negative electrode web was then left for 4 hours under vacuum conditions at an ambient temperature of 105°C to obtain a negative electrode.

<Production of lithium ion secondary battery>

A wound cell (discharge capacity equivalent to 520 mAh) was produced using a single-layer separator made from polypropylene and the above-described negative and positive electrodes and was placed inside an aluminum packing material. Thereafter, the aluminum packing material was filled with an $LiPF_6$ solution having a concentration of 1.0 M as an electrolysis solution (mixed solvent of 3/7 (volume ratio) ethylene carbonate (EC)/ethyl methyl carbonate (EMC) used as solvent; 2 volume% (solvent ratio) of vinylene carbonate contained as additive). The aluminum packing material was then closed with heat sealing at a temperature of 150°C to tightly seal up the opening of the aluminum packing material, and a lithium ion secondary battery was accordingly produced. The lithium ion secondary battery was used in order to evaluate rate characteristics, cycle characteristics, and preservation stability. The results are shown in Table 1.

(Examples 2-5)

In each Example, a slurry composition for lithium ion secondary battery positive electrode-use, a slurry composition for lithium ion secondary battery negative electrode-use, a positive electrode for lithium ion secondary battery-use, a negative electrode for lithium ion secondary battery-use, and a lithium ion secondary battery were produced in the same way as in Example 1, with the exception that the amount of the water-soluble polymer X and the amount of the particulate polymer Y were changed as shown in Table 1.

The evaluations were then performed for the same categories as in Example 1. The results are shown in Table 1.

(Examples 6-16)

Water-soluble polymers X were prepared in the same way as in Example 1, with the exception that the monomers shown in Table 1 were used at the percentage contents shown in Table 1. In each Example, a slurry composition for lithium ion secondary battery positive electrode-use, a slurry composition for lithium ion secondary battery negative electrode-use, a positive electrode for lithium ion secondary battery-use, a negative electrode for lithium ion secondary battery-use, and a lithium ion secondary battery were produced in the same way as in Example 5, except for using these water-soluble polymers X. The evaluations were then performed for the same categories as in Example 1. The results are shown in Table 1.

As illustrated in Table 1, in addition to the monomers used in Example 1, the following were used in preparation of the water-soluble polymer X: ethoxylated pentaerythritol tetraacrylate (ATM-35E produced by Shin-Nakamura Chemical Co., Ltd.; equivalent to compound (V) for which n1 + n2 + n3 + n4 = 35; functionality = 4) as the multifunctional compound (C) in Examples 8 to 12, methyl acrylate as another compound (monomer) in Examples 13 and 14, acrylonitrile as the compound (B) in Example 15, and ethoxylated pentaerythritol tetraacrylate (ATM-35E produced by Shin-Nakamura Chemical Co., Ltd.; equivalent to compound (V) for which n1 + n2 + n3 + n4 = 35; functionality = 4) as the multifunctional compound (C) and 2-acrylamide-2-methylpropane sulfonic acid as the compound (D) in Example 16.

(Comparative Examples 1-3)

Water-soluble polymers X were prepared in the same way as in Example 1, with the exception that the monomers shown in Table 1 were used at the percentage contents shown in Table 1. In each Comparative Example, a slurry composition for lithium ion secondary battery positive electrode-use, a slurry composition for lithium ion secondary battery negative electrode-use, a positive electrode for lithium ion secondary battery-use, a negative electrode for lithium ion secondary battery-use, and a lithium ion secondary battery were produced in the same way as in Example 1, except for

using these water-soluble polymers X. The evaluations were then performed for the same categories as in Example 1. The results are shown in Table 1.

(Comparative Example 4)

A slurry composition for lithium ion secondary battery positive electrode-use, a slurry composition for lithium ion secondary battery negative electrode-use, a positive electrode for lithium ion secondary battery-use, a negative electrode for lithium ion secondary battery-use, and a lithium ion secondary battery were produced in the same way as in Example 1, with the exception that the polymer used as the water-soluble polymer X was the aqueous solution of the water-soluble polymer X obtained in Example 1 and adjusted to a pH of 7.3 (solid content concentration 1%) using a lithium hydroxide aqueous solution. The evaluations were then performed for the same categories as in Example 1. The results are shown in Table 1.

(Comparative Example 5)

A slurry composition for lithium ion secondary battery negative electrode-use, a slurry composition for lithium ion secondary battery positive electrode-use, a negative electrode for lithium ion secondary battery-use, a positive electrode for lithium ion secondary battery-use, and a lithium ion secondary battery were produced in the same way as in Example 1, except for using a 2% aqueous solution of carboxymethyl cellulose sodium salt ("MAC350HC" produced by Nippon Paper Industries Co., Ltd., degree of swelling in electrolysis solution of 115 mass%) instead of the water-soluble polymer X. In the positive electrode, however, the aluminum foil used as the current collector was damaged by excessive corrosion, preventing evaluation of the adhesion strength between the positive electrode mixed material layer and the current collector and of the rate characteristics, cycle characteristics, and preservation stability of the lithium ion secondary battery.

In Table 1 below:

"AA" represents acrylic acid;
"AAm" represents acrylamide;
"AN" represents acrylonitrile;
"EPETA" represents ethoxylated pentaerythritol tetraacrylate;
"MA" represents methyl acrylate;
"ACL" represents acrylic-based polymer;
"CMC" represents carboxymethyl cellulose sodium salt; and
"AMPS" represents 2-acrylamide-2-methylpropane sulfonic acid.

**[0096]** [Table 1]

| | | | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 | Comparative Example 1 | Comparative Example 2 | Comparative Example 3 | Comparative Example 4 | Comparative Example 5 |
|---|---|---|---|---|---|---|---|---|---|---|---|---|---|---|---|---|---|---|---|---|---|---|---|---|
| Water-soluble polymer X | Monomer composition | Ethylenically unsaturated carboxylic acid compound (A) [mass%] | AA | 25.0 | 25.0 | 25.0 | 25.0 | 25.0 | 50.0 | 75.0 | 24.0 | 25.0 | 25.0 | 25.0 | 20.0 | 25.0 | 25.0 | 25.0 | 25.0 | 25.0 | 10.0 | 80.0 | 25.0 | CMC |
| | | Compound (B) [mass%] | AAm | 75.0 | 75.0 | 75.0 | 75.0 | 75.0 | 50.0 | 25.0 | 75.0 | 70.0 | 65.0 | 60.0 | 55.0 | 70.0 | 60.0 | 40.0 | 72.5 | 40.0 | 80.0 | 10.0 | 75.0 | |
| | | | AN | 0.0 | 0.0 | 0.0 | 0.0 | 0.0 | 0.0 | 0.0 | 0.0 | 0.0 | 0.0 | 0.0 | 0.0 | 0.0 | 0.0 | 35.0 | 0.0 | 0.0 | 0.0 | 0.0 | 0.0 | |
| | | Multifunctional compound (C) [mass%] | EPETA | 0.0 | 0.0 | 0.0 | 0.0 | 0.0 | 0.0 | 0.0 | 1.0 | 5.0 | 10.0 | 15.0 | 25.0 | 0.0 | 0.0 | 0.0 | 1.0 | 0.0 | 0.0 | 0.0 | 0.0 | |
| | | Compound (D) [mass%] | AMPS | 0.0 | 0.0 | 0.0 | 0.0 | 0.0 | 0.0 | 0.0 | 0.0 | 0.0 | 0.0 | 0.0 | 0.0 | 0.0 | 0.0 | 0.0 | 1.5 | 0.0 | 0.0 | 0.0 | 0.0 | |
| | | Other compounds | MA | 0.0 | 0.0 | 0.0 | 0.0 | 0.0 | 0.0 | 0.0 | 0.0 | 0.0 | 0.0 | 0.0 | 0.0 | 5.0 | 15.0 | 0.0 | 0.0 | 35.0 | 10.0 | 10.0 | 0.0 | |
| | A/B [-] | | | 0.33 | 0.33 | 0.33 | 0.33 | 0.33 | 1.00 | 3.00 | 0.32 | 0.36 | 0.38 | 0.42 | 0.36 | 0.36 | 0.42 | 0.63 | 0.34 | 0.63 | 0.13 | 8.00 | 0.33 | |
| | (A+D)/B [-] | | | - | - | - | - | - | - | - | - | - | - | - | - | - | - | - | 0.37 | - | - | - | - | - |
| | Degree of swelling in electrolysis solution [mass%] | | | 105 | 105 | 105 | 105 | 105 | 108 | 110 | 105 | 115 | 115 | 115 | 118 | 110 | 118 | 105 | 105 | 140 | 125 | 125 | 105 | 115 |
| | pH at solid content concentration of 1 mass% [-] | | | 3.0 | 3.0 | 3.0 | 3.0 | 3.0 | 2.7 | 2.5 | 3.0 | 3.0 | 3.0 | 3.0 | 3.3 | 3.0 | 3.0 | 3.0 | 3.0 | 3.0 | 4.0 | 2.5 | 7.3 | 7.5 |
| | Blending amount (parts by mass) | | | 2 | 2 | 2 | 1.5 | 1.5 | 1.5 | 1.5 | 1.5 | 1.5 | 1.5 | 1.5 | 1.5 | 1.5 | 1.5 | 2 | 2 | 2 | 2 | 2 | 2 | 2 |
| Particulate polymer Y | Type | | | ACL | ACL | ACL | ACL | ACL | ACL | ACL | ACL | ACL | ACL | ACL | ACL | ACL | ACL | ACL | ACL | ACL | ACL | ACL | ACL | ACL |
| | Blending amount (parts by mass) | | | 2 | 1 | 1.5 | 1.5 | 1 | 1 | 1 | 1 | 1 | 1 | 1 | 1 | 1 | 1 | 2 | 2 | 2 | 2 | 2 | 2 | 2 |
| Y/X [-] | | | | 1.00 | 0.50 | 0.75 | 1.00 | 0.67 | 0.67 | 0.67 | 0.67 | 0.67 | 0.67 | 0.67 | 0.67 | 0.67 | 0.67 | 1.00 | 1.00 | 1.00 | 1.00 | 1.00 | 1.00 | 1.00 |
| pH of slurry composition | | | | 10.1 | 9.1 | 9.5 | 10.5 | 9.8 | 9.6 | 9.5 | 10.5 | 10.5 | 10.5 | 10.5 | 10.7 | 10.5 | 10.5 | 10.1 | 9.8 | 10.5 | 12.3 | 9.3 | 12.5 | 12.0 |
| Adhesion strength between current collector and positive electrode mixed material layer | | | | A | A | A | A | A | A | A | A | A | A | A | A | B | B | A | A | B | C | A | C | - |
| Rate characteristics | | | | B | B | B | A | A | A | B | A | A | A | B | B | A | A | B | A | C | C | C | C | - |
| Cycle characteristics | | | | B | B | B | A | A | A | B | A | A | A | B | B | B | B | B | A | C | C | C | C | - |
| Preservation stability | | | | B | B | B | A | A | A | B | A | A | A | B | B | B | B | B | A | C | C | C | C | - |

Examples 1-16 and Comparative Examples 1-5 in Table 1 demonstrate that in Examples 1-15, the internal resistance of a lithium ion secondary battery was sufficiently reduced, and furthermore excellent adhesion strength between the positive electrode mixed material layer and the current collector along with excellent life characteristics such as the cycle characteristics and the preservation stability were obtained.

Examples 1-5 in Table 1 also demonstrate that the internal resistance of a lithium ion secondary battery could be further reduced and the life characteristics further improved by changing the blending amount of the water-soluble polymer X, the blending amount of the particulate polymer Y, the sum of these blending amounts, and the ratio (Y/X) of these blending amounts.

Additionally, Examples 6-16 in Table 1 demonstrate that the internal resistance of a lithium ion secondary battery could be further reduced, and further improvement could be achieved in the adhesion strength between the positive electrode mixed material layer and the current collector and in the life characteristics, by changing the type and blending proportions of monomers used in preparation of the water-soluble polymer X.

INDUSTRIAL APPLICABILITY

According to the present disclosure, it is possible to provide a binder composition for lithium ion secondary battery positive electrode-use that reduces internal resistance of a lithium ion secondary battery while also providing the lithium ion secondary battery with excellent life characteristics.

According to the present disclosure, it is also possible to provide a slurry composition for lithium ion secondary battery positive electrode-use that reduces internal resistance of a lithium ion secondary battery while also providing the lithium ion secondary battery with excellent life characteristics.

Furthermore, according to the present disclosure, it is possible to provide a positive electrode for lithium ion secondary battery-use that reduces internal resistance of a lithium ion secondary battery while also providing the lithium ion secondary battery with excellent life characteristics, and to provide a lithium ion secondary battery that has reduced internal resistance and excellent life characteristics.

**Claims**

**1.** A binder composition for lithium ion secondary battery positive electrode-use, comprising:

a water-soluble polymer X and water; wherein
the water-soluble polymer X is obtained through polymerization of a monomer composition X including:

an ethylenically unsaturated carboxylic acid compound (A) composed of either or both of an ethylenically unsaturated carboxylic acid and an ethylenically unsaturated carboxylic acid salt; and
a copolymerizable compound (B) that is neither an ethylenically unsaturated carboxylic acid nor an ethylenically unsaturated carboxylic acid salt, and that has an ethylenically unsaturated bond and a solubility of at least 7 g in 100 g of water at 20°C;

in the monomer composition X, a percentage content of the ethylenically unsaturated carboxylic acid compound (A) among all monomers is at least 20.0 mass% and no greater than 79.5 mass%, and a percentage content of the compound (B) among all monomers is at least 20.0 mass% and no greater than 79.5 mass%; and
the water-soluble polymer X has a degree of swelling in electrolysis solution of less than 120%, and a pH of less than 7.0 at a solid content concentration of 1 mass%, wherein the degree of swelling is determined by

(i) forming a film with a thickness of 1 ± 0.3 mm by drying an aqueous solution containing the water-soluble polymer X in an environment of 50% humidity and a temperature of from 23°C to 25°C;
(ii) drying the resultant film for 10 hours in a vacuum dryer at a temperature of 60°C;
(iii) cutting out approximately 1 g of the dried film, and precisely weighing said film piece, the mass of said film piece being taken to be W0;
(iv) immersing the film piece in an electrolysis solution, said electrolysis solution being a 1.0 M $LiPF_6$ solution in 3/7 (volume ratio) ethylene carbonate/ethyl methyl carbonate with 2 volume% (solvent ratio) of vinylene carbonate, for 3 days at an ambient temperature of 60°C, and allowing it to swell;
(v) pulling the film piece out of the electrolysis solution and measuring the mass thereof after electrolysis solution on the surface of the film piece has been wiped off, the mass of said swollen film piece being taken to be W1; and
(vi) calculating the degree of swelling in electrolysis solution using the following calculation formula:

$$\text{Degree of swelling in electrolysis solution (mass\%)} = W1/W0 \times 100.$$

2. The binder composition for lithium ion secondary battery positive electrode-use of claim 1, wherein the monomer composition X further includes a multifunctional compound (C) having a polyoxyalkylene structure and at least two ethylenically unsaturated bonds, and a percentage content of the multifunctional compound (C) among all monomers in the monomer composition X is at least 0.1 mass% and no greater than 20.0 mass%.

3. The binder composition for lithium ion secondary battery positive electrode-use of claim 1 or 2, wherein a value obtained by dividing the percentage content of the ethylenically unsaturated carboxylic acid compound (A) among all monomers in the monomer composition X by the percentage content of the compound (B) among all monomers in the monomer composition X is less than 1.5.

4. The binder composition for lithium ion secondary battery positive electrode-use of claim 1 or 2, wherein the monomer composition X further includes a compound (D) composed of at least one selected from the group consisting of an ethylenically unsaturated sulfonic acid, an ethylenically unsaturated sulfonic acid salt, an ethylenically unsaturated phosphoric acid, and an ethylenically unsaturated phosphoric acid salt, and a percentage content of the compound (D) among all monomers in the monomer composition X is at least 0.4 mass% and no greater than 30.0 mass%.

5. The binder composition for lithium ion secondary battery positive electrode-use of claim 4, wherein a value obtained by dividing a sum of the percentage content of the ethylenically unsaturated carboxylic acid compound (A) among all monomers in the monomer composition X and the percentage content of the compound (D) among all monomers in the monomer composition X by the percentage content of the compound (B) among all monomers in the monomer composition X is less than 1.5.

6. The binder composition for lithium ion secondary battery positive electrode-use of any one of claims 1 to 5, further comprising a particulate polymer Y, the particulate polymer Y at least containing an acrylic-based polymer.

7. A slurry composition for lithium ion secondary battery positive electrode-use comprising:

    the binder composition for lithium ion secondary battery positive electrode-use of any one of claims 1 to 6; and
    a positive electrode active material.

8. The slurry composition for lithium ion secondary battery positive electrode-use of claim 7, wherein the positive electrode active material contains Ni.

9. A positive electrode for lithium ion secondary battery-use comprising, on a current collector, a positive electrode mixed material layer prepared using the slurry composition for lithium ion secondary battery positive electrode-use of claim 7 or 8.

10. A lithium ion secondary battery comprising:

    a positive electrode, a negative electrode, an electrolysis solution, and a separator; wherein
    the positive electrode is the positive electrode for lithium ion secondary battery-use of claim 9.

**Patentansprüche**

1. Bindemittelzusammensetzung zur Verwendung in einer positiven Elektrode einer Lithiumionen-Sekundärbatterie, umfassend:

    ein wasserlösliches Polymer X und Wasser; wobei
    das wasserlösliche Polymer X erhalten wird durch Polymerisation einer Monomerzusammensetzung X umfassend:

        eine ethylenisch ungesättigte Carbonsäureverbindung (A) zusammengesetzt aus einer ethylenisch ungesättigten Carbonsäure und/oder einem Salz einer ethylenisch ungesättigten Carbonsäure; und

eine copolymerisierbare Verbindung (B), die weder eine ethylenisch ungesättigte Carbonsäure noch ein Salz einer ethylenisch ungesättigten Carbonsäure ist, und die eine ethylenisch ungesättigte Bindung und eine Löslichkeit von mindestens 7 g in 100 g Wasser bei 20°C aufweist;

in der Monomerzusammensetzung X ein prozentualer Anteil der ethylenisch ungesättigten Carbonsäureverbindung (A) an allen Monomeren mindestens 20,0 Massen-% und nicht größer als 79,5 Massen-% beträgt, und ein prozentualer Anteil der Verbindung (B) an allen Monomeren mindestens 20,0 Massen-% und nicht größer als 79,5 Massen-% beträgt; und
das wasserlösliche Polymer X einen Quellungsgrad in Elektrolytlösung von weniger als 120% und einen pH von weniger als 7,0 bei einer Feststoffanteil-Konzentration von 1 Massen-% aufweist, wobei der Quellungsgrad bestimmt wird durch

(i) Herstellung eines Films mit einer Dicke von 1 $\pm$ 0,3 mm durch Trocknen einer wässrigen Lösung enthaltend das wasserlösliche Polymer X in einer Umgebung mit 50% Feuchtigkeit und einer Temperatur von 23°C bis 25°C;
(ii) Trocken des resultierenden Films für 10 Stunden in einem Vakuumtrockner bei einer Temperatur von 60°C;
(iii) Ausschneiden von etwa 1 g des getrockneten Films, und genaues Wiegen dieses Filmstücks, wobei die Masse dieses Filmstücks als W0 bezeichnet wird;
(iv) Immersion des Filmstücks in eine Elektrolyt-Lösung, wobei diese Elektrolytlösung eine 1,0 M $LiPF_6$-Lösung in 3/7 (Volumenverhältnis) Ethylencarbonat/Ethylmethylcarbonat mit 2 Volumen-% (Lösungsmittelverhältnis) Vinylencarbonat ist, für 3 Tage bei einer Umgebungstemperatur von 60°C, und Quellenlassen des Filmstücks;
(v) Herausziehen des Filmstücks aus der Elektrolytlösung und Messung seiner Masse, nachdem die Elektrolytlösung auf der Oberfläche des Filmstücks abgewischt wurde, wobei die Masse dieses gequollenen Filmstücks als W1 bezeichnet wird; und
(vi) Errechnen des Quellungsgrades in Elektrolytlösung unter Verwendung der folgenden Berechnungsformel:

$$\text{Quellungsgrad in Elektrolytlösung (Massen-\%)} = W1/W0 \times 100.$$

**2.** Die Bindemittelzusammensetzung zur Verwendung in einer positiven Elektrode einer Lithiumionen-Sekundärbatterie gemäß Anspruch 1, wobei die Monomerzusammensetzung X desweiteren eine multifunktionale Verbindung (C) umfasst, die eine Polyoxyalkylen-Struktur und mindestens zwei ethylenisch ungesättigte Bindungen aufweist, und ein prozentualer Anteil der multifunktionalen Verbindung (C) an allen Monomeren in der Monomerzusammensetzung X mindestens 0,1 Massen-% und nicht größer als 20,0 Massen-% beträgt.

**3.** Die Bindemittelzusammensetzung zur Verwendung in einer positiven Elektrode einer Lithiumionen-Sekundärbatterie gemäß Anspruch 1 oder 2, wobei ein Wert, der durch Dividieren des prozentualen Anteils der ethylenisch ungesättigten Carbonsäureverbindung (A) an allen Monomeren in der Monomerzusammensetzung X durch den prozentualen Anteil der Verbindung (B) an allen Monomeren in der Monomerzusammensetzung X erhalten wird, weniger als 1,5 beträgt.

**4.** Die Bindemittelzusammensetzung zur Verwendung in einer positiven Elektrode einer Lithiumionen-Sekundärbatterie gemäß Anspruch 1 oder 2, wobei die Monomerzusammensetzung X desweiteren eine Verbindung (D) umfasst, die zusammengesetzt ist aus mindestens einem Element ausgewählt aus der Gruppe bestehend aus einer ethylenisch ungesättigten Sulfonsäure, einem Salz einer ethylenisch ungesättigten Sulfonsäure, einer ethylenisch ungesättigten Phosphorsäure, und einem Salz einer ethylenisch ungesättigten Phosphorsäure, und ein prozentualer Anteil der Verbindung (D) an allen Monomeren in der Monomerzusammensetzung X mindestens 0,4 Massen-% und nicht größer als 30,0 Massen-% beträgt.

**5.** Die Bindemittelzusammensetzung zur Verwendung in einer positiven Elektrode einer Lithiumionen-Sekundärbatterie gemäß Anspruch 4, wobei
ein Wert, der durch Dividieren einer Summe aus dem prozentualen Anteil der ethylenisch ungesättigten Carbonsäureverbindung (A) an allen Monomeren in der Monomerzusammensetzung X und dem prozentualen Anteil der Verbindung (D) an allen Monomeren in der Monomerzusammensetzung X durch den prozentualen Anteil der Verbindung (B) an allen Monomeren in der Monomerzusammensetzung X erhalten wird, weniger als 1,5 beträgt.

**6.** Die Bindemittelzusammensetzung zur Verwendung in einer positiven Elektrode einer Lithiumionen-Sekundärbatterie gemäß einem der Ansprüche 1 bis 5, desweiteren umfassend ein partikuläres Polymer Y, wobei das partikuläre Polymer Y mindestens ein Polymer auf Acrylbasis enthält.

**7.** Aufschlämmungszusammensetzung zur Verwendung in einer positiven Elektrode einer Lithiumionen-Sekundärbatterie umfassend:

die Bindemittelzusammensetzung zur Verwendung in einer positiven Elektrode einer Lithiumionen-Sekundärbatterie gemäß einem der Ansprüche 1 bis 6; und
ein positivelektrodenaktives Material.

**8.** Aufschlämmungszusammensetzung zur Verwendung in einer positiven Elektrode einer Lithiumionen-Sekundärbatterie gemäß Anspruch 7, wobei das positivelektrodenaktive Material Ni enthält.

**9.** Positive Elektrode zur Verwendung in einer Lithiumionen-Sekundärbatterie umfassend, auf einem Stromabnehmer, eine Positivelektrodenschicht aus gemischtem Material, hergestellt unter Verwendung der Aufschlämmungszusammensetzung zur Verwendung in einer positiven Elektrode einer Lithiumionen-Sekundärbatterie gemäß Anspruch 7 oder 8.

**10.** Lithiumionen-Sekundärbatterie umfassend:

eine positive Elektrode, eine negative Elektrode, eine Elektrolytlösung, und einen Separator; wobei
die positive Elektrode die positive Elektrode zur Verwendung in einer Lithiumionen-Sekundärbatterie gemäß Anspruch 9 ist.

## Revendications

**1.** Composition de liant pour utilisation dans une électrode positive pour batterie secondaire lithium-ion, comprenant :

un polymère soluble dans l'eau X et de l'eau ; dans laquelle
le polymère soluble dans l'eau X est obtenu par polymérisation d'une composition de monomère X incluant :

un composé d'acide carboxylique éthylénique insaturé (A) composé de l'un ou des deux d'un acide carboxylique éthylénique insaturé et d'un sel d'acide carboxylique éthylénique insaturé ; et
un composé copolymérisable (B) qui n'est ni un acide carboxylique éthylénique insaturé ni un sel d'acide carboxylique éthylénique insaturé, et qui a une liaison éthylénique insaturée et une solubilité d'au moins 7 g dans 100 g d'eau à 20 °C ;
dans la composition de monomère X, une teneur en pourcentage du composé d'acide carboxylique éthylénique insaturé (A) parmi tous les monomères est d'au moins 20,0 % en masse et de pas plus de 79,5 % en masse, et une teneur en pourcentage du composé (B) parmi tous les monomères est d'au moins 20,0 % en masse et de pas plus de 79,5 % en masse ; et
le polymère soluble dans l'eau X a un degré de gonflement dans une solution d'électrolyse de moins de 120 %, et un pH de moins de 7,0 à une concentration de matières solides de 1 % en masse, dans laquelle le degré de gonflement est déterminé par

(i) formation d'un film ayant une épaisseur de $1 \pm 0{,}3$ mm par séchage d'une solution aqueuse contenant le polymère soluble dans l'eau X dans un environnement de 50 % d'humidité et d'une température de 23 °C à 25 °C ;
(ii) séchage du film résultant pendant 10 heures dans un séchoir à vide à une température de 60 °C ;
(iii) découpe d'approximativement 1 g du film séché, et pesée précise dudit morceau de film, la masse dudit morceau de film étant désignée par W0 ;
(iv) immersion du morceau de film dans une solution d'électrolyse, ladite solution d'électrolyse étant une solution de $LiPF_6$ 1,0 M dans un mélange 3/7 (rapport en volume) de carbonate d'éthylène/carbonate d'éthylméthyle avec 2 % en volume (rapport de solvant) de carbonate de vinylène, pendant 3 jours à une température ambiante de 60 °C, et fait de le laisser gonfler ;

(v) retrait du morceau de film de la solution d'électrolyse et mesure de la masse de celui-ci après que la solution d'électrolyse sur la surface du morceau de film a été essuyée, la masse dudit morceau de film gonflé étant désignée par W1 ; et
(vi) calcul du degré de gonflement dans une solution d'électrolyse en utilisant la formule de calcul suivante :

$$\text{Degré de gonflement dans une solution d'électrolyse (\% en masse)} = W1/W0 \times 100.$$

**2.** Composition de liant pour utilisation dans une électrode positive pour batterie secondaire lithium-ion selon la revendication 1, dans laquelle la composition de monomère X inclut en outre un composé multifonctionnel (C) ayant une structure de polyoxyalkylène et au moins deux liaisons éthyléniques insaturées, et une teneur en pourcentage du composé multifonctionnel (C) parmi tous les monomères dans la composition de monomère X est d'au moins 0,1 % en masse et de pas plus de 20,0 % en masse.

**3.** Composition de liant pour utilisation dans une électrode positive pour batterie secondaire lithium-ion selon la revendication 1 ou 2, dans laquelle une valeur obtenue en divisant la teneur en pourcentage du composé d'acide carboxylique éthylénique insaturé (A) parmi tous les monomères dans la composition de monomère X par la teneur en pourcentage du composé (B) parmi tous les monomères dans la composition de monomère X est inférieure à 1,5.

**4.** Composition de liant pour utilisation dans une électrode positive pour batterie secondaire lithium-ion selon la revendication 1 ou 2, dans laquelle la composition de monomère X inclut en outre un composé (D) composé d'au moins un choisi dans le groupe constitué d'un acide sulfonique éthylénique insaturé, d'un sel d'acide sulfonique éthylénique insaturé, d'un acide phosphorique éthylénique insaturé et d'un sel d'acide phosphorique éthylénique insaturé, et une teneur en pourcentage du composé (D) parmi tous les monomères dans la composition de monomère X est d'au moins 0,4 % en masse et de pas plus de 30,0 % en masse.

**5.** Composition de liant pour utilisation dans une électrode positive pour batterie secondaire lithium-ion selon la revendication 4, dans laquelle une valeur obtenue en divisant une somme de la teneur en pourcentage du composé d'acide carboxylique éthylénique insaturé (A) parmi tous les monomères dans la composition de monomère X et de la teneur en pourcentage du composé (D) parmi tous les monomères dans la composition de monomère X par la teneur en pourcentage du composé (B) parmi tous les monomères dans la composition de monomère X est inférieure à 1,5.

**6.** Composition de liant pour utilisation dans une électrode positive pour batterie secondaire lithium-ion selon l'une quelconque des revendications 1 à 5, comprenant en outre un polymère particulaire Y, le polymère particulaire Y contenant au moins un polymère à base d'acrylique.

**7.** Composition de suspension pour utilisation dans une électrode positive pour batterie secondaire lithium-ion comprenant :

la composition de liant pour utilisation dans une électrode positive pour batterie secondaire lithium-ion selon l'une quelconque des revendications 1 à 6 ; et
un matériau actif d'électrode positive.

**8.** Composition de suspension pour utilisation dans une électrode positive pour batterie secondaire lithium-ion selon la revendication 7, dans laquelle le matériau actif d'électrode positive contient du Ni.

**9.** Électrode positive pour utilisation dans une batterie secondaire lithium-ion comprenant, sur un collecteur de courant, une couche de matériau mixte d'électrode positive préparée en utilisant la composition de suspension pour utilisation dans une électrode positive pour batterie secondaire lithium-ion selon la revendication 7 ou 8.

**10.** Batterie secondaire lithium-ion comprenant :

une électrode positive, une électrode négative, une solution d'électrolyse et un séparateur ; dans laquelle l'électrode positive est l'électrode positive pour utilisation dans une batterie secondaire lithium-ion selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011076981 A
- WO 2013080938 A
- JP 2012204303 A